(19) 

Europäisches
Patentamt

European
Patent Office

Office européen
des brevets

(11) **EP 4 492 243 A1**

(12) **EUROPEAN PATENT APPLICATION**
published in accordance with Art. 153(4) EPC

(43) Date of publication:
**15.01.2025 Bulletin 2025/03**

(21) Application number: **23787580.2**

(22) Date of filing: **06.04.2023**

(51) International Patent Classification (IPC):
*G06F 11/10* (2006.01)

(52) Cooperative Patent Classification (CPC):
**G06F 11/10**

(86) International application number:
**PCT/CN2023/086651**

(87) International publication number:
**WO 2023/197935 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2022 CN 202210381892**

(71) Applicant: **Huawei Technologies Co., Ltd.
Shenzhen, Guangdong 518129 (CN)**

(72) Inventors:
• **LIN, Sian Jheng
Shenzhen, Guangdong 518129 (CN)**

• **SUN, Yining
Shenzhen, Guangdong 518129 (CN)**
• **LI, Buchan
Shenzhen, Guangdong 518129 (CN)**
• **HAN, Yung Hsiang
Shenzhen, Guangdong 518129 (CN)**
• **BAI, Bo
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD FOR STORING DATA, METHOD FOR READING DATA, AND RELATED DEVICE**

(57)    Embodiments of this application provide a data storage method, a data reading method, and a related device. The method includes: obtaining output data from a processor, where the output data includes target data to be written into a memory and poison data indication information corresponding to the target data, and the poison data indication information indicates whether the target data is poison data; and writing preset data into the memory based on the poison data indication information, or writing to-be-written data determined based on the target data into the memory. In the foregoing technical solution, the poison data can be indicated without sacrificing a parity bit. Therefore, according to the foregoing technical solution, the poison data stored in the memory can be identified, and a problem that an error correction capability is degraded due to sacrifice of the parity bit is avoided.

FIG. 5

EP 4 492 243 A1

## Description

This application claims priority to Chinese Patent Application No. 202210381892.9, filed with the China National Intellectual Property Administration on April 12, 2022 and entitled "DATA STORAGE METHOD, DATA READING METHOD, AND RELATED DEVICE", which is incorporated herein by reference in its entirety.

## TECHNICAL FIELD

Embodiments of this application relate to the field of information technologies, and more specifically, to a data storage method, a data reading method, and a related device.

## BACKGROUND

To quickly identify problematic data in a memory, poison data indication information (which may also be referred to as a poison bit (poison bit)) is introduced in the industry. The poison data indication information indicates whether data read from the memory is poison data (poison data) or non-poison data (non-poison data). Generally, the poison data indication information may use only 1 bit (bit) to indicate whether corresponding data is the poison data or the non-poison data. For example, if the data read from the memory is the non-poison data, a value of the poison data indication information may be 0. If the data read from the memory is the poison data, a value of the poison data indication information may be 1.

Currently, the memory sacrifices a parity bit of the data to store the poison data indication information. In this case, a quantity of parity bits stored in the memory is reduced, and a correctable error may become an uncorrectable error. Therefore, how to indicate poison data without affecting a memory error correction capability is an urgent problem to be resolved in the industry.

## SUMMARY

Embodiments of this application provide a data storage method, a data reading method, and a related device, to identify poison data stored in a memory without sacrificing a parity bit.

According to a first aspect, embodiments of this application provide a data storage method. The method includes: obtaining output data from a processor, where the output data includes target data to be written into a memory and poison data indication information corresponding to the target data, and the poison data indication information indicates whether the target data is poison data; and writing preset data into the memory based on the poison data indication information, or writing to-be-written data determined based on the target data into the memory.

In the foregoing technical solution, if the obtained output data from the processor is the poison data (poison data), the preset data (which may also be referred to as a poison pattern (poison pattern)) may be directly written into the memory. In this way, when data is read from the memory, it may be determined, based on the preset data, whether the read data is the poison data. In this way, there is no need to use an additional storage unit in the memory to store the poison data indication information that indicates whether the data is the poison data. In other words, in the foregoing technical solution, the poison data may be indicated without sacrificing a parity bit. Therefore, according to the foregoing technical solution, the poison data stored in the memory can be identified, and a problem that an error correction capability is degraded due to sacrifice of the parity bit is avoided.

With reference to the first aspect, in a possible implementation of the first aspect, the preset data is an invalid codeword.

If the preset data is the invalid codeword, it can be more easily identified that the data is the poison data. In other words, after a piece of data is read from the memory, it is determined whether the data is a valid codeword. If the piece of data is not a valid codeword, the piece of data may be the poison data.

Optionally, a Hamming distance between the preset data and the valid codeword is large. In this way, it is easier to determine whether the data obtained from the memory is the poison data.

With reference to the first aspect, in a possible implementation of the first aspect, the writing preset data into the memory based on the poison data indication information, or writing to-be-written data determined based on the target data into the memory includes: when the poison data indication information indicates that the target data is the poison data, writing the preset data into the memory; and when the poison data indication information indicates that the target data is not the poison data, performing error correction encoding on the target data to obtain the to-be-written data, and writing the to-be-written data into the memory.

According to the foregoing technical solution, in a scenario in which the memory is not degraded, the preset data may be written into the memory when the data from the processor is the poison data. When the data from the processor is not the poison data, error correction encoding is normally performed on the data from the processor, and a result obtained through the error correction encoding is written into the memory.

With reference to the first aspect, in a possible implementation of the first aspect, the memory includes a first memory rank and a second memory rank, the target data includes first target data and second target data, and the poison data indication information includes first poison data indication information corresponding to the first target data and second poison data indication information corresponding to the second target data; and the writing preset data into the memory based on the poison data indication information, or writing to-be-written data determined based on the target data into the memory includes: when the first poison data indication information indicates that the first target data is the poison data or the second poison data indication information indicates that the second target data is the poison data, writing the preset data into the first memory rank and the second memory rank; and when the first poison data indication information indicates that the first target data is not the poison data and the second poison data indication information indicates that the second target data is not the poison data, performing error correction encoding on the first target data and the second target data to obtain the to-be-written data, and writing the to-be-written data into the first memory rank and the second memory rank.

According to the foregoing technical solution, in a scenario in which the memory is degraded, for data that needs to be written into two degraded memories (that is, the first memory rank and the second memory rank), as long as one piece of data is the poison data, the preset data is written into the two degraded memories. If neither of the two pieces of data is the poison data, error correction encoding is performed on the two pieces of data, and to-be-written data obtained by error correction encoding is written into the two memories. The to-be-written data obtained by performing error correction encoding may include a data bit and a parity bit, where the data bit may be written into the first memory rank and the second memory rank. Optionally, the parity bit may be written into one memory in the first memory rank and the second memory rank. For example, the parity bit may be written into the second memory rank. The parity bit may also be written into the first memory rank and the second memory rank. For example, the first memory rank and the second memory rank each store half of parity bits.

With reference to the first aspect, in a possible implementation of the first aspect, the memory includes a first memory rank and a second memory rank, the target data includes first target data and second target data, the poison data indication information includes first poison data indication information corresponding to the first target data and second poison data indication information corresponding to the second target data, and the preset data includes first preset data, second preset data, and third preset data; and the writing preset data into the memory based on the poison data indication information, or writing to-be-written data determined based on the target data into the memory includes: when the first poison data indication information indicates that the first target data is the poison data and the second poison data indication information indicates that the second target data is the poison data, writing the first preset data into the first memory rank and the second memory rank; when the first poison data indication information indicates that the first target data is not the poison data and the second poison data indication information indicates that the second target data is not the poison data, performing error correction encoding on the first target data and the second target data to obtain the to-be-written data, and writing the to-be-written data into the first memory rank and the second memory rank; when the first poison data indication information indicates that the first target data is the poison data and the second poison data indication information indicates that the second target data is not the poison data, determining the to-be-written data based on the second target data and the second preset data, and writing the to-be-written data into the first memory rank and the second memory rank; and when the first poison data indication information indicates that the first target data is not the poison data and the second poison data indication information indicates that the second target data is the poison data, determining the to-be-written data based on the first target data and the third preset data, and writing the to-be-written data into the first memory rank and the second memory rank.

The foregoing technical solution is another technical solution of how to store error indication data in a scenario in which the memory is degraded. In the foregoing technical solution, three pieces of preset data are set. The three pieces of preset data are used in the following three cases. In a first case, both pieces of target data that need to be written into two degraded memories (that is, the first memory rank and the second memory rank) are the poison data. In a second case, one of the two pieces of target data that needs to be written into the two degraded memories is the poison data. In a third case, the other one of the two pieces of target data that needs to be written into the two degraded memories used is the poison data. Therefore, according to the foregoing technical solution, when one of the two pieces of target data is not the poison data, the target data that is not poison data may be written into the memory. In this way, if one of the two pieces of target data is not the poison data, the target data may also be correctly stored.

Similarly, the first preset data may include a data bit and a parity bit, and the data bit of the first preset data may be written into the first memory rank and the second memory rank. The parity bit of the first preset data may be written into one memory in the first memory rank and the second memory rank. For example, the parity bit of the first preset data may be written into the second memory rank. The parity bit of the first preset data may also be written into the first memory rank and the second memory rank. For example, the first memory rank and the second memory rank each store half of parity bits.

The to-be-written data determined based on the second target data and the second preset data may also include a data bit and a parity bit. The data bit of the to-be-written data may be written into the first memory rank and the second memory rank. The parity bit of the to-be-written data may be written into one memory in the first memory rank and the second memory rank. For example, the parity bit of the to-be-written data may be written into the second memory rank. The parity bit of the to-be-written data may also be written into the first memory rank and the second memory rank. For example, the first memory rank and the second memory rank each store half of parity bits.

The to-be-written data determined based on the first target data and the third preset data may also include a data bit and a parity bit. The data bit of the to-be-written data may be written into the first memory rank and the second memory rank. The parity bit of the to-be-written data may be written into one memory in the first memory rank and the second memory rank. For example, the parity bit of the to-be-written data may be written into the second memory rank. The parity bit of the to-be-written data may also be written into the first memory rank and the second memory rank. For example, the first memory rank and the second memory rank each store half of parity bits.

The to-be-written data determined based on the first target data and the second target data may also include a data bit and a parity bit. The data bit of the to-be-written data may be written into the first memory rank and the second memory rank. The parity bit of the to-be-written data may be written into one memory in the first memory rank and the second memory rank. For example, the parity bit of the to-be-written data may be written into the second memory rank. The parity bit of the to-be-written data may also be written into the first memory rank and the second memory rank. For example, the first memory rank and the second memory rank each store half of parity bits.

With reference to the first aspect, in a possible implementation of the first aspect, the determining the to-be-written data based on the second target data and the second preset data includes: performing N + M error correction encoding on first combined data to obtain a first encoding result, where the first combined data is $x^{N/2+M}M_2(x)$, $M_2(x)$ is the second target data, and N and M are positive integers; and adding the first encoding result and the second preset data to obtain the to-be-written data; and the determining the to-be-written data based on the first target data and the third preset data includes: performing N + M error correction encoding on second combined data to obtain a second encoding result, where the first combined data is $x^M M_1(x)$, and $M_1(x)$ is the first target data; and adding the second encoding result and the third preset data to obtain the to-be-written data.

According to a second aspect, embodiments of this application provide a data reading method, where the method includes: receiving target data from a memory; and determining, based on preset data and the target data, output data to be sent to a processor and poison data indication information that indicates whether the output data is poison data.

In the foregoing technical solution, one piece of preset data may be used to determine whether data read from the memory is the poison data. In this way, there is no need to use an additional storage unit in the memory to store the poison data indication information that indicates whether the data is the poison data. In other words, in the foregoing technical solution, the poison data may be indicated without sacrificing a parity bit. Therefore, according to the foregoing technical solution, the poison data stored in the memory can be identified, and a problem that an error correction capability is degraded due to sacrifice of the parity bit is avoided.

With reference to the first aspect, in a possible implementation of the second aspect, the preset data is an invalid codeword.

If the preset data is the invalid codeword, it can be more easily identified that the data is the poison data. In other words, after a piece of data is read from the memory, it is determined whether the data is a valid codeword. If the piece of data is not a valid codeword, the piece of data may be the poison data.

Optionally, a Hamming distance between the preset data and the valid codeword is large. In this way, it is easier to determine whether the data obtained from the memory is the poison data.

With reference to the second aspect, in a possible implementation of the second aspect, the determining, based on preset data and the target data, output data to be sent to a processor and poison data indication information that indicates whether the output data is poison data includes: determining whether a Hamming distance between the target data and the preset data is less than a preset threshold; if the Hamming distance is less than the preset threshold, determining that the output data is first data, and the poison data indication information indicates that the first data is the poison data; if the Hamming distance is greater than or equal to the preset threshold, performing error correction decoding on the target data; if decoding succeeds, determining that the output data is decoded data, the poison data indication information indicates that the decoded data is not the poison data, and the decoded data is data obtained by performing error correction decoding on the target data; and if decoding fails, determining that the output data is second data, and the poison data indication information indicates that the second data is the poison data.

According to the foregoing technical solution, in a scenario in which the memory is not degraded, when the data from the memory is the poison data or decoding fails, the first data/second data may be sent to the processor to indicate that the data is the poison data. In addition, if the data in the memory is the preset data written by using the method shown in the first aspect, and a quantity of symbols with which a random error occurs in the preset data is less than the preset threshold, the error can still be identified in the foregoing technical solution, to determine that the target data is the poison data.

Optionally, the first data and the second data may be data bits of the preset data. The first data and the second data may also be other random data. This is because the poison data indication information already indicates that the first data and the second data are the poison data, and the processor may directly ignore the poison data.

With reference to the second aspect, in a possible implementation of the second aspect, the memory includes a first memory rank and a second memory rank, and the target data includes first target data and second target data; and the determining, based on preset data and the target data, output data to be sent to a processor and poison data indication information that indicates whether the output data is poison data includes: determining whether a Hamming distance between the target data and the preset data is less than a preset threshold; if the Hamming distance is less than the preset threshold, determining that the output data is first data, and the poison data indication information indicates that the first data is the poison data; if the Hamming distance is greater than or equal to the preset threshold, performing error correction decoding on the target data; if decoding succeeds, determining that the output data includes first decoded data and second decoded data, the poison data indication information indicates that the first decoded data and the second decoded data are not the poison data, the first decoded data corresponds to the first target data, and the second decoded data corresponds to the second target data; and if decoding fails, determining that the output data includes second data and third data, and the output data indicates that the second data and the third data are not the poison data.

The foregoing technical solution may be applied to a scenario in which the memory is degraded. For data that needs to be read from two degraded memories (that is, the first memory rank and the second memory rank), if there is a large difference between the read data and the preset data, the read data may be decoded, and data that needs to be sent to the processor is determined based on a decoding result.

With reference to the second aspect, in a possible implementation of the second aspect, the memory includes a first memory rank and a second memory rank, the target data includes first target data and second target data, and the preset data includes first preset data, second preset data, and third preset data; and the determining, based on preset data and the target data, output data to be sent to a processor and poison data indication information that indicates whether the output data is poison data includes: determining whether a Hamming distance between the target data and the preset data is less than a preset threshold; if the Hamming distance is less than the preset threshold, determining that the output data includes third data and fourth data, and the poison data indication information indicates that the third data and the fourth data are the poison data; and if the Hamming distance is greater than or equal to the preset threshold, decoding the target data based on a first error feature, a second error feature, and a third error feature, and determining, based on a decoding result, the output data and the poison data indication information that indicates whether the output data is the poison data, where the first error feature is an error feature of the target data, the second error feature is an error feature of the second preset data, and the third error feature is an error feature of the third preset data.

The foregoing technical solution may be applied to a scenario in which the memory is degraded. For data that needs to be read from two degraded memories (that is, the first memory rank and the second memory rank), if there is a large difference between the read data and the preset data, the read data may be decoded, and data that needs to be sent to the processor is determined based on a decoding result.

With reference to the second aspect, in a possible implementation of the second aspect, the decoding the target data based on a first error feature, a second error feature, and a third error feature, and determining, based on a decoding result, the output data and the poison data indication information that indicates whether the output data is the poison data includes: decoding the target data based on the first error feature and the second error feature, to obtain a first decoding result; decoding the target data based on the first error feature and the third error feature, to obtain a second decoding result; decoding the target data based on the first error feature, to obtain a third decoding result; if only the first decoding result is success, determining that the output data includes second decoded data and second data, the poison data indication information indicates that the second decoded data is not the poison data and the second data is the poison data, and the second decoded data corresponds to the second target data; if only the second decoding result is success, determining that the output data includes third data and first decoded data, the poison data indication information indicates that the third data is the poison data and the first decoded data is not the poison data, and the first decoded data corresponds to the first target data; if only the third decoding result is success, determining that the output data includes the first decoded data and the second decoded data, and the output data indicates that the first decoded data and the second decoded data are not the poison data; and if at least two of the first decoding result, the second decoding result, and the third decoding result are success or all of the first decoding result, the second decoding result, and the third decoding result are failure, determining that the output data includes the third data and the fourth data, and the poison data indication information indicates that the third data and the fourth data are the poison data.

With reference to the second aspect, in a possible implementation of the second aspect, the memory includes the first memory rank and the second memory rank, the target data includes the first target data and the second target data, and the preset data includes the second preset data and the third preset data; the determining, based on preset data and the target data, output data to be sent to a processor and poison data indication information that indicates whether the output data is poison data includes: determining the output data and the poison data indication information based on the first error feature, the second error feature, and the third error feature, where the first error feature is the error feature of the target data, the second error feature is the error feature of the second preset data, and the third error feature is the error feature of the third preset data; if the first error feature is equal to the third error feature, the output data includes the first target data and the second target data, and the poison data indication information indicates that the first target data is not the poison data and the second target data is the poison data; if the first error feature is equal to the second error feature, the output data includes the first target data and the second target data, and the poison data indication information indicates that the first target data is the poison data and the second target data is not the poison data; and if the first error feature is an all-zero polynomial, the output data includes the first target data and the second target data, and the poison data indication information indicates that neither the first target data nor the second target data is the poison data.

The foregoing technical solution may be applied to a scenario in which the memory is degraded. For data that needs to be read from two degraded memories (that is, the first memory rank and the second memory rank), if there is a large difference between the read data and the preset data, the data may be directly output. In other words, the foregoing technical solution does not have an error correction decoding function, so that the data from the memory can be read more quickly.

The first target data and the second target data in the foregoing technical solution come from the first memory rank and the second memory rank. Optionally, parity data required in a decoding process of the first target data and the second target data may come from one of the first memory rank and the second memory rank. For example, the parity data may be obtained from the second memory rank. Optionally, the parity data that needs to be used in the decoding process of the first target data and the second target data may also come from the first memory rank and the second memory rank respectively. For example, the first memory rank and the second memory rank each store half of parity bits.

According to a third aspect, embodiments of this application provide a memory controller. A computer device includes a unit configured to implement any one of the first aspect or the possible implementations of the first aspect.

According to a fourth aspect, embodiments of this application provide a memory controller. A computer device includes a unit configured to implement any one of the second aspect or the possible implementations of the second aspect.

According to a fifth aspect, embodiments of this application provide a computer device, including a processor and a memory controller. The memory controller is configured to: obtain data from the processor and perform any one of the first aspect or the possible implementations of the first aspect.

According to a sixth aspect, embodiments of this application provide a computer device, including a processor and a memory controller. The memory controller is configured to: obtain data from a memory, perform any one of the second aspect or the possible implementations of the second aspect, to determine output data to be sent to the processor, and poison data indication information that indicates whether the output data is the poison data.

According to a seventh aspect, embodiments of this application provide a memory controller. A chip system includes a logic circuit. The logic circuit is configured to be coupled to an input/output interface, and transmit data through the input/output interface, to perform any one of the first aspect or the possible implementations of the first aspect.

According to an eighth aspect, embodiments of this application provide a memory controller. A chip system includes a logic circuit. The logic circuit is configured to be coupled to an input/output interface, and transmit data through the input/output interface, to perform any one of the second aspect or the possible implementations of the second aspect.

According to a ninth aspect, embodiments of this application provide a computer-readable storage medium. The computer-readable storage medium stores program code. When the computer storage medium is run on a computer, the computer is enabled to perform any one of the first aspect or the possible implementations of the first aspect.

According to a tenth aspect, embodiments of this application provide a computer-readable storage medium. The computer-readable storage medium stores program code. When the computer storage medium is run on a computer, the computer is enabled to perform any one of the second aspect or the possible implementations of the second aspect.

According to an eleventh aspect, embodiments of this application provide a computer program product. The computer program product includes computer program code. When the computer program code is run on a computer, the computer is enabled to perform any one of the first aspect or the possible implementations of the first aspect.

According to a twelfth aspect, embodiments of this application provide a computer program product. The computer program product includes computer program code. When the computer program code is run on a computer, the computer is enabled to perform any one of the first aspect or the possible implementations of the first aspect.


**BRIEF DESCRIPTION OF DRAWINGS**

FIG. 1A and FIG. 1B are a schematic diagram of reading and writing data from/into a memory;
FIG. 2A and FIG. 2B are another schematic diagram of reading and writing data from/into a memory;
FIG. 3 is a schematic diagram of a structure of a computer device to which an embodiment of this application is applied;
FIG. 4 is a schematic block diagram of a structure of a memory controller according to an embodiment of this application;
FIG. 5 is a schematic flowchart of a data storage method according to an embodiment of this application;
FIG. 6 is a schematic diagram of a degradation scenario in which 16 chips of user data are combined with 2 chips of redundant data (that is, a 16 + 2 chips configuration);

FIG. 7 is a schematic diagram of a degradation scenario in which 8 chips of user data are combined with 1 chip of redundant data (that is, an 8 + 1 chips configuration);

FIG. 8 is a schematic diagram of a data storage method according to an embodiment of this application;

FIG. 9 is a schematic diagram of another data storage method according to an embodiment of this application;

FIG. 10 is a schematic diagram of still another data storage method according to an embodiment of this application;

FIG. 11 is a schematic flowchart of a data reading method according to an embodiment of this application;

FIG. 12 is a schematic diagram of a data reading method according to an embodiment of this application;

FIG. 13 is a schematic diagram of another data reading method according to an embodiment of this application;

FIG. 14 is a schematic diagram of still another data reading method according to an embodiment of this application;

FIG. 15 is a schematic diagram of yet another data reading method according to an embodiment of this application;

FIG. 16 is a schematic block diagram of a structure of a memory controller according to an embodiment of this application; and

FIG. 17 is a schematic block diagram of a structure of a memory controller according to an embodiment of this application.

## DESCRIPTION OF EMBODIMENTS

The following describes technical solutions of embodiments in this application with reference to accompanying drawings.

In embodiments of this application, the word "example" or "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

In embodiments of this application, a subscript, for example, W1, may sometimes be incorrectly written in a non-subscript form, for example, W1. Expressed meanings are consistent when differences are not emphasized.

The computer architecture described in embodiments of this application is intended to describe the technical solutions in embodiments of this application more clearly, and does not constitute a limitation on the technical solutions provided in embodiments of this application. A person of ordinary skill in the art may learn that, with evolution of the computer architecture, the technical solutions provided in embodiments of this application are also applicable to a similar technical problem.

Reference to "one embodiment" or "some embodiments" described in this specification means that a specific characteristic, structure or feature described in combination with this embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

Common memory errors include a correctable error (correctable error, CE) and an uncorrectable error (uncorrectable error, UCE). The correctable error is an error that can be corrected by using error checking and correcting (error checking and correcting, ECC). The uncorrectable error is an error that cannot be corrected by using ECC. Unless otherwise specified, poison data (poison data) in this embodiment of this application refers to data in which the uncorrectable error occurs.

Data poisoning (data poisoning) is an error reporting mechanism. In the error reporting mechanism, when it is confirmed that an error occurring in data is an uncorrectable error, the poison data is still transferred, but the poison data is marked when the poison data is transferred. For example, at an encoding end of a memory controller, when detecting that an uncorrectable error occurs in data, a CPU may identify the data to be stored in the memory as poison data in a "bad data (bad data)" state. This error report informs the controller to perform special processing on the "poison data". At a decoding end of the memory controller, if the data is found to be the poison data after decoding, the data may be reported to the CPU, and the poison data may be separately processed (for example, the data is not accepted).

The memory (memory) in this embodiment of this application may also be referred to as a main memory (primary memory or main memory). The memory typically uses a random access memory (random access memory, RAM). Therefore, the memory is sometimes referred to as the RAM. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

A static memory (double data rate-dynamic random access memory, DDR DRAM) that supports dual data reads and random location access is often referred to as a DDR memory for short. The DRAM protocol specifies a column data bit width, which can be 4 bits, 8 bits, or 16 bits. Therefore, there are three types of DDR memory: x4, x8, and x16. In addition, data (data, DQ) width of a DRAM chip is the same as the column data bit width. Therefore, the DDR memory can be classified into x4 DQ, x8 DQ, and x16 DQ based on a DQ bus width.

Take double data rate 4 (double data rate 4, DDR4) memory as an example. In the industry, a DDR4 memory with a configuration of 16 chips of user data + 2 chips of redundant data (referred to as a 16 + 2 chips configuration) is used.

The memory in the computer device may include one or more memory modules (memory modules). The memory module may also be referred to as a memory bank, or may also be referred to as a memory for short sometimes. One memory module may include one or more memory ranks (rank). The DDR4 memory is used as an example. A single memory module may include two memory ranks, which are distributed in two edge connectors of the memory module, and each transmits an independent signal, to meet a multi-data signal transmission requirement. One memory rank may include a plurality of memory chips (chip).

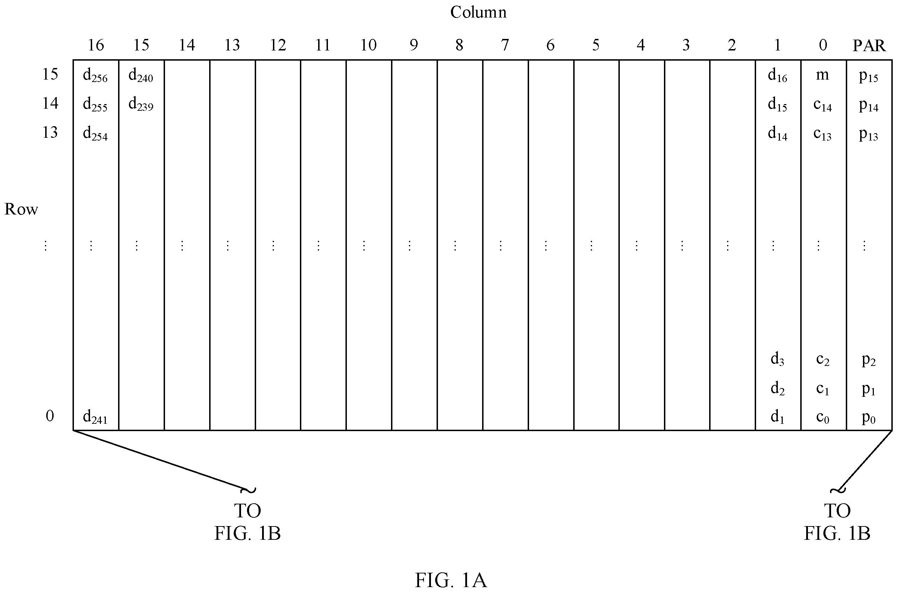

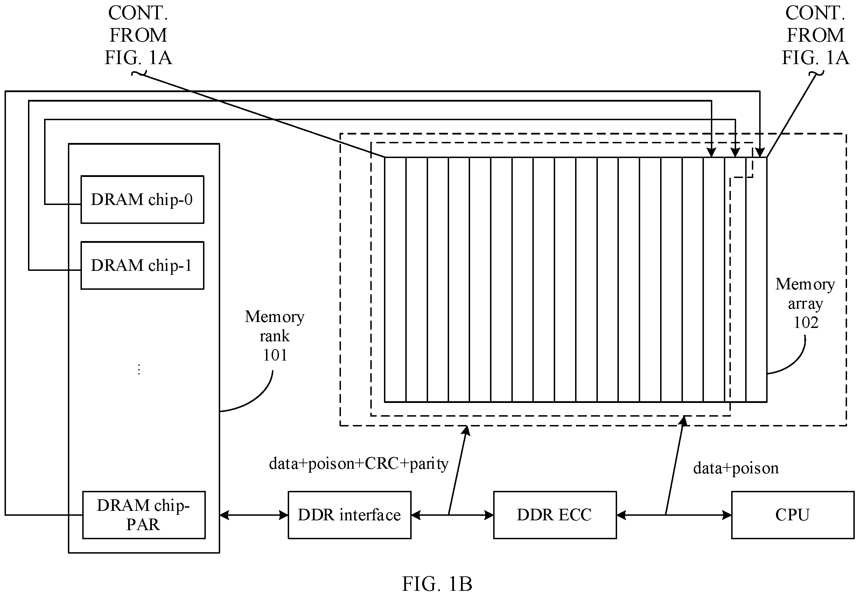

FIG. 1A and FIG. 1B are a schematic diagram of reading and writing data from/into a memory. A schematic diagram of reading and writing data from/into the memory shown in FIG. 1A and FIG. 1B is a schematic diagram of reading and writing data from/into a memory in a 16 + 2 chips configuration by using cyclic redundancy check (cyclic redundancy check, CRC)-15 encoding when poison data indication information is supported.

As shown in FIG. 1, a memory rank 101 includes 18 memory chips, which are: a DRAM chip-0 to a DRAM chip-16, and the memory rank 101 further includes a DRAM chip-parity bit (parity, PAR).

A memory array 102 shown in FIG. 1A and FIG. 1B is a 16-row $\times$ 18-column memory array. Each column of 16-bit data in the memory array 102 corresponds to one memory chip in the memory rank 101. For example, a column of data identified as PAR (referred to as a $PAR^{th}$ column of data) corresponds to a DRAM chip-PAR. A column of data identified as 0 (referred to as a $0^{th}$ column of data) corresponds to the DRAM chip-0. A column of data identified as 1 (referred to as a first column of data) corresponds to the DRAM chip-1, and the like.

As shown in FIG. 1, data sent by a central processing unit (central processing unit, CPU) to ECC of a DDR (that is, the DDR ECC shown in FIG. 1) may include two parts. A first part is data (represented by data in FIG. 1) output by the CPU after the CPU performs an operation on the data. The other part is poison data indication information (represented by poison in FIG. 1) indicates whether the data is poison data. After receiving data + poison, the DDR ECC performs error correction encoding on the data to obtain a CRC result (represented by CRC in FIG. 1) and a parity bit (represented by parity in FIG. 1). The DDR ECC sends data, poison, CRC, and parity to the memory rank 101 through a DDR interface. Each chip in the memory rank 101 stores corresponding information in a corresponding column. In FIG. 1, $d_1$ to $d_{256}$ indicate data in data, m indicates poison, $c_0$ to $c_{14}$ indicate CRC, and $p_1$ to $p_{15}$ indicate parity. Each DRAM chip in the memory rank 101 is configured to store a corresponding column of data. For example, the DRAM chip-1 stores data $d_1$ to $d_{16}$ in the first column, the DRAM chip-0 stores data poison and CRC in the $0^{th}$ column, and the DRAM chip-PAR stores data parity in the $PAR^{th}$ column.

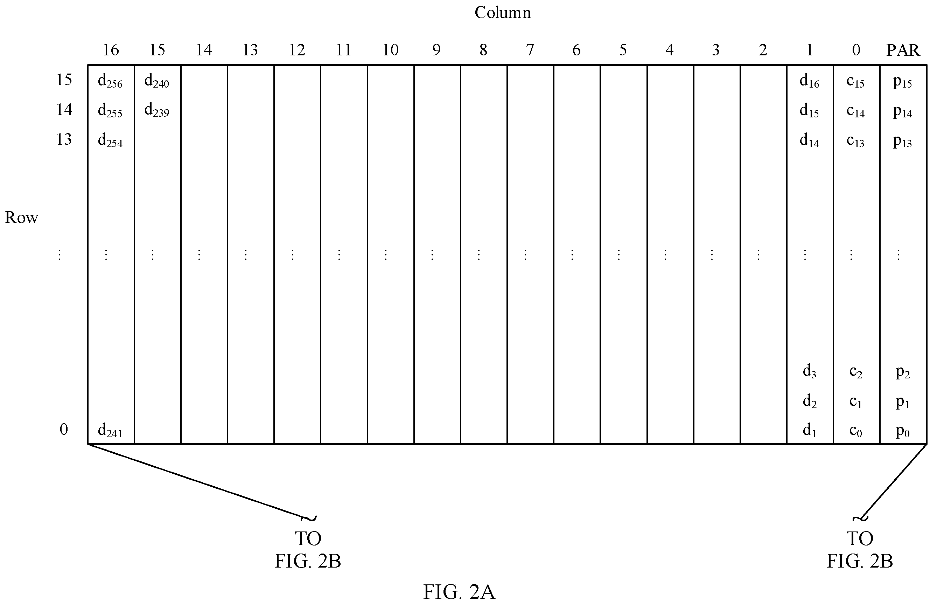

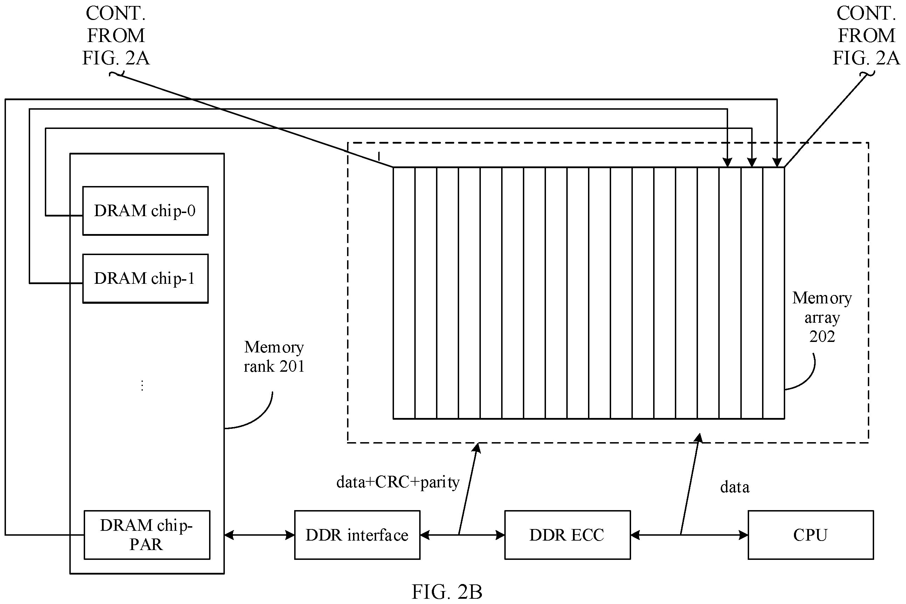

FIG. 2A and FIG. 2B are another schematic diagram of reading and writing data from/into a memory. A schematic diagram of reading and writing data from/into the memory shown in FIG. 2A and FIG. 2B is a schematic diagram of reading and writing data from/into a memory in a 16 + 2 chips configuration by using CRC-16 encoding when poison data indication information is not supported.

It can be learned that, a difference between FIG. 2A and FIG. 2B and FIG. 1A and FIG. 1B lies in that, because the poison data indication information does not need to be stored, all 16 bits in a $0^{th}$ column of a memory array 202 in a memory rank 201 may be used to store CRC. In other words, in the solution shown in FIG. 1, the memory rank 101 sacrifices a parity bit to store the poison data indication information. As a result, when chip-kill (chip-kill) occurs on any chip of the memory rank 101, a poison pattern (poison pattern) is completely uncorrectable. However, the same poison pattern can be corrected in the scenario shown in FIG. 2.

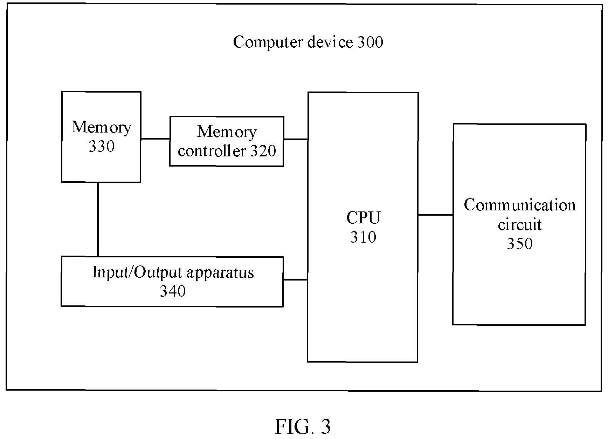

FIG. 3 is a schematic diagram of a structure of a computer device to which an embodiment of this application is applied. A computer device 300 shown in FIG. 3 includes a memory 310, a memory controller (which may also be referred to as a DDR controller) 320, and a CPU 330. The CPU 330 may read, by using the memory controller 320, data stored in the memory 310, perform an operation on the read data, and store, in the memory 310 by using the memory controller 320, an operation result or data generated in an operation process. The memory 330 may include one or more memory modules.

In some embodiments, the memory 330, the memory controller 320, and the CPU 310 may be different components (chips or circuits). In this case, the memory 330, the memory controller 320, and the CPU 310 may be connected through a bus.

In some other embodiments, the memory controller 320 and the CPU 310 may be integrated in one component. For example, the memory controller 320 and the CPU may be integrated in one chip or a system on chip (system on chip, SoC). In this case, the memory controller 320 and the CPU 310 in the chip (or the SoC) may be connected through an on-chip bus (which may also be referred to as an internal bus). The chip (or the SoC) and the memory 330 may be connected through a system bus (which may also be referred to as the internal bus).

In other embodiments, the memory 330, the memory controller 320, and the CPU 310 may be integrated in a same component. For example, the memory 330, the memory controller 320, and the CPU 310 may be integrated into one chip or SoC. In this case, the memory 330, the memory controller 320, and the CPU 310 in the chip (or the SoC) may be connected through an on-chip bus (which may also be referred to as an internal bus).

In addition to the CPU 310, the memory controller 320, and the memory 330, the computer device 300 shown in FIG. 3 may further include other necessary components, for example, an input/output apparatus 340 and a communication circuit 350.

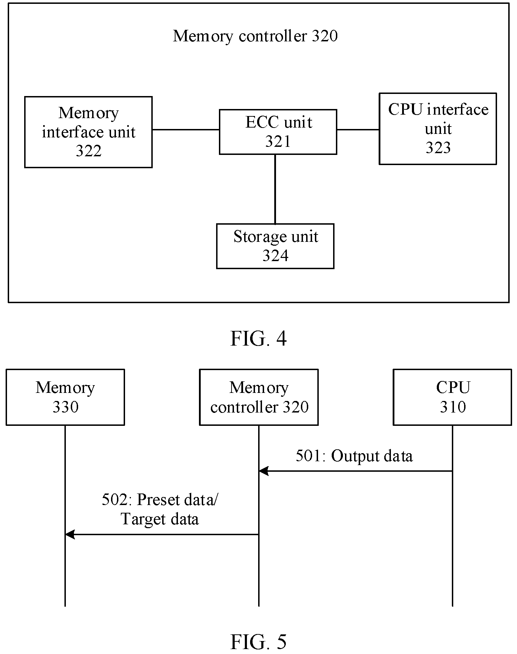

FIG. 4 is a schematic block diagram of a structure of a memory controller according to an embodiment of this application. The memory controller shown in FIG. 4 is the memory controller 320 in FIG. 3. The memory controller 320 shown in FIG. 4 includes an ECC unit 321, a memory interface unit 322, a processor interface unit 323, and a storage unit 324.

The ECC unit 321 is configured to determine data that needs to be written into a memory or sent to a CPU.

The memory interface unit 322 is configured to receive data from the memory or send data to the memory.

The processor interface unit 323 is configured to receive data from the CPU or send data to the CPU.

The storage unit 324 is configured to store preset data.

Types of error correction encoding and decoding used by the memory controller are not limited in embodiments of this application. For example, the memory controller may use Hamming code (Hamming code), CRC with parity code, Bose-Chaudhuri-Hocquenghem (Bose-Chaudhuri-Hocquenghem, BCH) code, Reed-Solomon code (Reed-Solomon code, RS code), or the like.

In error correction encoding and decoding, a plurality of bits may be considered as one symbol (symbol). Error correction encoding and decoding is usually considered in space of $GF(2^n)$. To be specific, n bits are considered as one symbol (n is a positive integer greater than or equal to 1), error correction encoding and decoding is performed by using a plurality of symbols, and a correction capability may implement error correction of one or more symbols. For example, N + K RS code in $GF(2^n)$ indicates that there are N + K symbols in total (N and K are positive integers greater than or equal to 1). A complete codeword includes N data symbols and K parity bit symbols, and each symbol includes n bits. Therefore, there are n × (N + K) bits in total, and a correction capability can achieve error correction of K/2 symbols.

FIG. 5 is a schematic flowchart of a data storage method according to an embodiment of this application. The method shown in FIG. 5 may be implemented by the memory controller 320 shown in FIG. 3 or FIG. 4.

501: A memory controller 320 obtains output data from a CPU 310.

The output data may include target data to be written into the memory 330 and poison data indication information corresponding to the target data. The poison data indication information indicates whether the target data is poison data.

502: The memory controller 320 writes, based on the poison data indication information, preset data stored in the storage unit 324 into the memory 330, or writes to-be-written data determined based on the target data into the memory 330.

If the poison data indication information indicates that the target data is the poison data, the memory controller 302 may directly write the preset data stored in the storage unit 324 into the memory 330. If the poison data indication information indicates that the target data is not the poison data, the memory controller 320 may perform error correction encoding on the target data to obtain an error correction encoding result, and determine, based on the error correction encoding result, to-be-written data that is less than the to-be-written data written into the memory 330.

According to the method shown in FIG. 5, if the memory controller finds that the obtained data is the poison data, the memory controller may directly write the preset data into the memory. In this way, when the data read from the memory is the preset data or the read data is similar to the preset data, the memory controller may directly determine that the read data is the poison data. In this way, storage space of the memory does not need to be occupied to store the poison data indication information. The memory may store data in a manner that does not need to support poison data indication information. In this way, an uncorrectable error caused by occupation of a parity bit does not occur.

A DDR memory supports memory bank (bank)/device (device) replacement. In other words, a faulty chip is eliminated and a redundant chip is used as a common chip. This manner may be referred to as memory degradation.

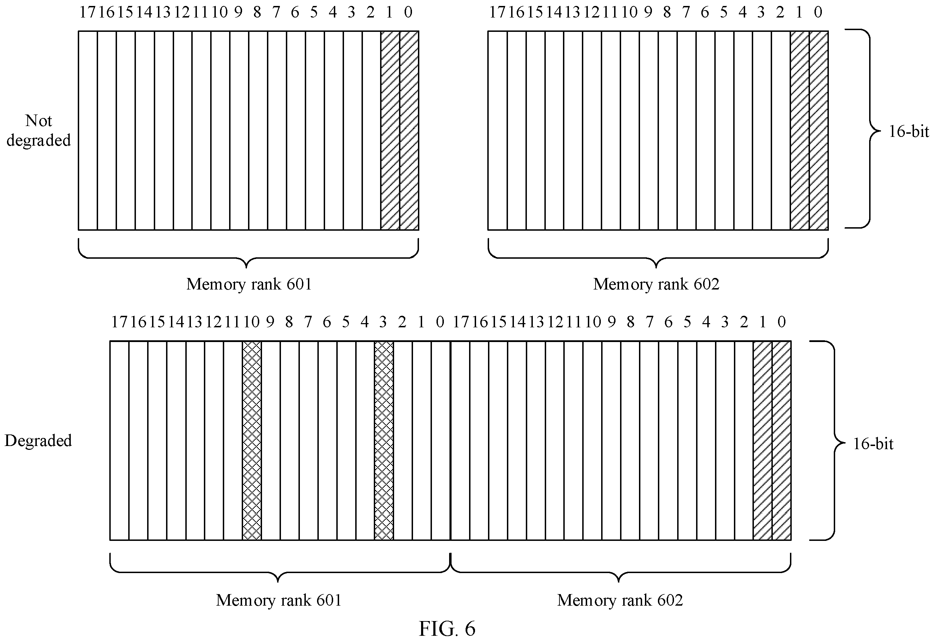

FIG. 6 is a schematic diagram of a degradation scenario in which 16 chips of user data are combined with 2 chips of redundant data (that is, a 16 + 2 chips configuration).

As shown in FIG. 6, a memory rank 601 includes 18 DRAM chips. The 18 DRAM chips one-to-one correspond to 18 columns of data. The 18 DRAM chips may be respectively referred to as a DRAM chip 1_0 to a DRAM chip 1_17, where the DRAM chip 1_0 corresponds to data in a $0^{th}$ column, the DRAM chip 1_1 corresponds to data in a first column, and the like.

Similarly, the memory rank 602 also includes 18 DRAM chips. The 18 DRAM chips one-to-one correspond to 18 columns of data. The 18 DRAM chips may be respectively referred to as a DRAM chip 2_0 to a DRAM chip 2_17, where the DRAM chip 2_0 corresponds to data in a $0^{th}$ column, the DRAM chip 2_1 corresponds to data in a first column, and the like.

When not degraded, the DRAM chip 1_0, the DRAM chip 1_1, the DRAM chip 2_0, and the DRAM chip 2_2 are used to store redundant data. When the DRAM chip 1_10 and the DRAM chip 1_3 are faulty, the memory rank 601 and the memory rank 602 are degraded. In this case, the DRAM chip 1_0 and the DRAM chip 1_1 are configured to store user data, and the DRAM chip 2_0 and the DRAM chip 2_1 are still configured to store redundant data. However, in comparison with non-degradation, content stored in the degraded DRAM chip 2_0 and the degraded DRAM chip 2-1 is determined based on all user data in the memory rank 601 and the memory rank 602 (that is, data stored in the DRAM chip 2_2 to the DRAM chip 2_17, data stored in the DRAM chip 1_0 to the DRAM chip 1_2, data stored in the DRAM chip 1_4 to the DRAM chip 1_9, and data stored in the DRAM chip 1_11 to the DRAM chip 1_17).

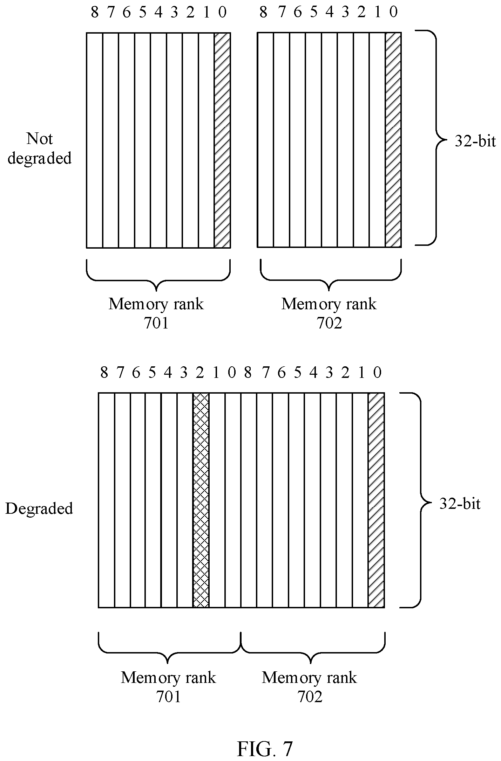

FIG. 7 is a schematic diagram of a degradation scenario in which 8 chips of user data are combined with 1 chip of redundant data (that is, an 8 + 1 chips configuration).

As shown in FIG. 7, a memory rank 701 includes 9 DRAM chips. The 9 DRAM chips one-to-one correspond to 9 columns of data. The nine DRAM chips may be respectively referred to as a DRAM chip 1_0 to a DRAM chip 1_8, where the DRAM chip 1_0 corresponds to data in a $0^{th}$ column, the DRAM chip 1_1 corresponds to data in a first column, and the like.

Similarly, the memory rank 702 also includes 9 DRAM chips. The 9 DRAM chips one-to-one correspond to 9 columns of data. The nine DRAM chips may be respectively referred to as a DRAM chip 2_0 to a DRAM chip 2_8, where the DRAM chip 2_0 corresponds to data in a $0^{th}$ column, the DRAM chip 2_1 corresponds to data in a first column, and the like.

When not degraded, the DRAM chip 1_0 and the DRAM chip 2_0 are used to store redundant data. When the DRAM chip 1_2 is faulty, the memory rank 701 and the memory rank 702 are degraded. In this case, the DRAM chip 1_0 is configured to store user data, and the DRAM chip 2_0 is still configured to store redundant data. However, in comparison with non-degradation, content stored in the degraded DRAM chip 2_0 is determined based on all user data in the memory rank 701 and the memory rank 702 (that is, data stored in the DRAM chip 2_1 to the DRAM chip 2_8, the DRAM chip 1_0 to the DRAM chip 1_1, and the DRAM chip 1_3 to the DRAM chip 1_8).

The method shown in FIG. 5 may be applied to a scenario in which a chip is not degraded, or may be applied to a scenario in which a chip is degraded.

The following assumes that a memory configuration is 16 + 2 chips, RS code is used for error correction encoding, and one symbol includes eight bits. In this case, a complete codeword has a total of 32 data symbols and 4 parity bit symbols.

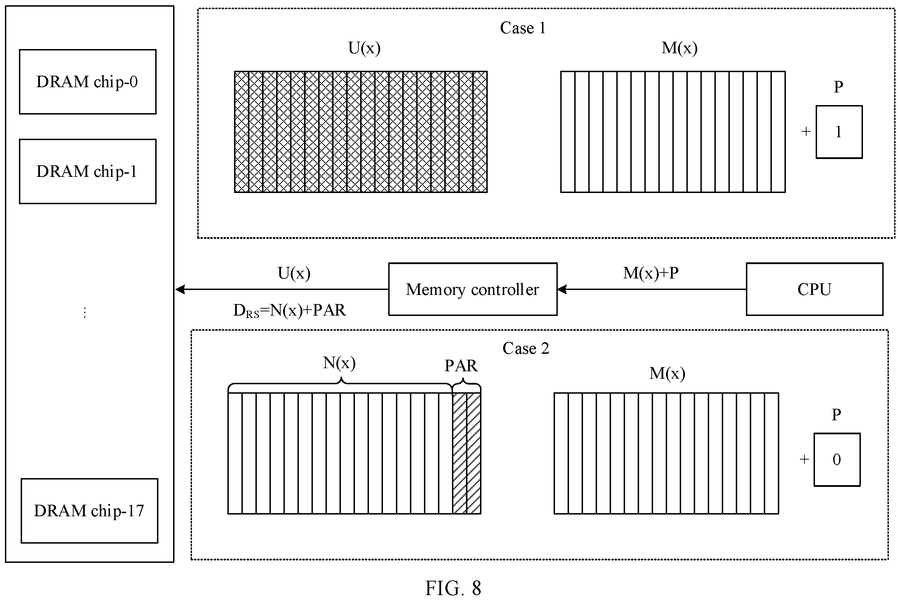

FIG. 8 is a schematic diagram of a data storage method according to an embodiment of this application. FIG. 8 shows a process of storing data in a non-degraded scenario.

In the non-degraded scenario, a length of poison data indication information may be 1 bit. It is assumed that a letter P is used to represent the poison data indication information. It is assumed that if P = 1, it indicates that data indicated by the poison data indication information is poison data. If P = 0, it indicates that data indicated by the poison data is not poison data.

M(x) represents data output by a CPU, and $D_{RS}$ represents a result obtained after M(x) error correction encoding is performed by using RS code. An encoding result is divided into two parts: a first part is a data bit (which may also be referred to as data for short), and a second part is a parity bit. The data bit is represented by N(x), and the parity bit is represented by PAR.

**[0100]** U(x) represents preset data. The preset data may also be referred to as a poison pattern (poison pattern). U(x) may be represented by using formula 1:

$$U(x) = x^4 U^m(x) + U^p(x) \tag{formula 1}$$

$U^m(x)$ is a polynomial with a degree of 31, and each coefficient is one symbol (8 bits). Therefore, there are 32 symbols in total. $U^p(x)$ is a polynomial with a degree of 3, and each coefficient is one symbol. Therefore, there are four symbols in total. U(x) is a polynomial with a degree of 35 and has 36 symbols ($36 \times 8 = 288$ bits). U(x) can be selected in advance and stored in a memory controller.

U(x) may be a valid codeword, or may be an invalid codeword. The RS code is also used as an example. An invalid codeword means that after U(x) is decoded by using the RS code, a decoder decodes an invalid (nonexistent) location. For example, when a valid codeword with an error is decoded by using 32 + 4 RS code, after detecting that received data is incorrect based on an error feature (syndrome), an error location is searched for. The error location is located in 0, 1, 2, ..., 35 of these 36 locations. On the contrary, after the invalid codeword is decoded by using the RS code, the found error location falls in one of 36, 37, ..., and 254. This embodiment gives an invalid codeword $U(x) = u_{35}x^{35} + u_{34}x^{34} + ... + u_4x^4 + u_3 x^3 + u_2x^2 + u_1x + u_0$, $u_{35} = u_{34} = ... = u_4 = 0x33$, $u_3 = 0x71$, $u_2 = 0x89$, $u_1 = 0xF6$, $u_0 = 0x06$. After RS code decoding, it is determined that an error exists based on the error feature, and the found error location is 254. By using the invalid codeword, poison data can be found more easily during decoding. For example, if it is found during decoding that a decoding result is the invalid codeword, it may be determined that the data is the poison data (poison data). Correspondingly, poison data indication information of the data may be set to 1 (that is, it indicates that the data is the poison data). The greater a distance between the invalid codeword and another codeword, the greater an error correction capability.

As shown in FIG. 8, if P corresponds to data M(x) output by the CPU is equal to 1, case 1 is met. In this case, the memory controller directly writes the stored preset data U(x) into the memory. U(x) may also be considered as two parts, where $x^4U^m(x)$ may be considered as a data bit, and $U^p(x)$ may be considered as a parity bit. Therefore, when U(x) is written into the memory, $x^4U^m(x)$ can be written into a DRAM chip that is used for storing a data bit (for, example, a DRAM chip-2 to a DRAM chip-17), and $U^p(x)$ is written into a DRAM chip that is used for storing a parity bit (for, example, a DRAM chip-0 and a DRAM chip-1).

As shown in FIG. 8, if P corresponds to data M(x) output by the CPU is equal to 0, case 2 is met. In this case, the memory controller performs RS code encoding on M(x) to obtain an encoded result $D_{RS}$, and writes $D_{RS}$ into the memory. A data bit and a parity bit of $D_{RS}$ are written into a corresponding DRAM chip. For example, the parity bit may be written into the DRAM chip-0 and the DRAM chip-1, and the data bit may be written into the DRAM chip-2 to the DRAM chip-17.

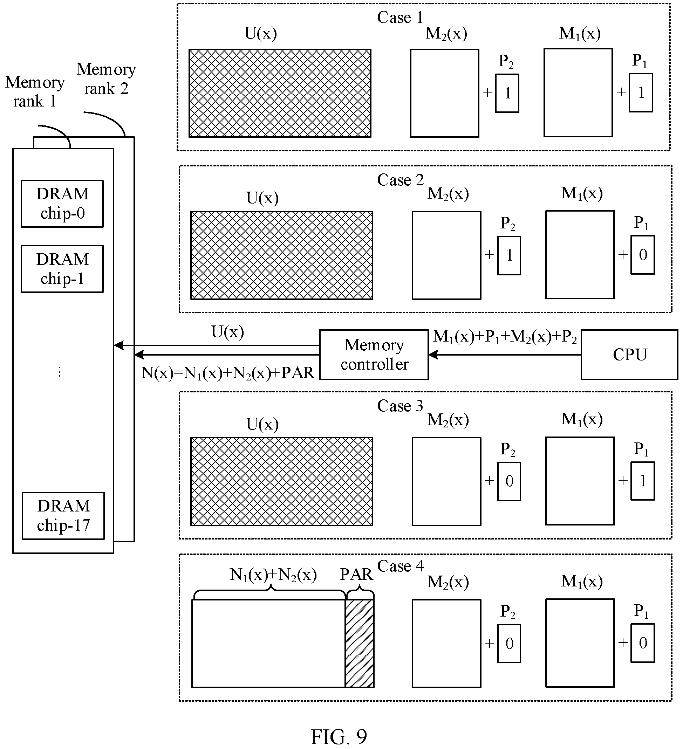

FIG. 9 is a schematic diagram of another data storage method according to an embodiment of this application. FIG. 9 shows a process of storing data in a degraded scenario.

In the degraded scenario, a length of poison data indication information may be 2 bit. It is assumed that two letters $P_1$ and $P_2$ are used to represent two pieces of poison data indication information. $P_1$ and $P_2$ may separately correspond to one piece of target data output by the CPU. For ease of description, $P_1$ may be referred to as first poison data indication information, $P_2$ may be referred to as second poison data indication information, target data corresponding to $P_1$ may be referred to as first target data, and target data corresponding to $P_2$ may be referred to as second target data.

It is assumed that $P_1 = 1$, it indicates that the first target data is the poison data. If $P_1 = 0$, it indicates that the first target data is not the poison data. If $P_2 = 1$, it indicates that the second target data is the poison data. If $P_2 = 0$, it indicates that the second target data is not the poison data.

In FIG. 9, the first target data is denoted by $M_1(x)$, and the second target data is denoted by $M_2(x)$.

In FIG. 9, U(x) is still used to represent preset data. A difference from the method shown in FIG. 8 lies in that, because the memory rank 1 and the memory rank 2 are degraded, the memory rank 1 and the memory rank 2 can store 544 bits of data in total (68 symbols in total). Therefore, if formula 1 is still used to represent U(x), $U^m(x)$ is a polynomial with a degree of 63, and each coefficient is one symbol (8 bits). Therefore, there are 32 symbols in total. $U^p(x)$ is a polynomial with a degree of 3, and each coefficient is one symbol. Therefore, there are four symbols in total. U(x) is a polynomial with a degree of 35 and has 36 symbols ($36 \times 8 = 288$ bits). U(x) can be selected in advance and stored in a memory controller.

Similarly, U(x) in FIG. 9 may be a valid codeword, or may be an invalid codeword. For example, $U(x) = u_{67}x^{67} + u_{66}x^{66} + ... + u_4x^4 + u_3x^3 + u_2x^2 + u_1x + u_0$, $u_{67} = u_{66} = ... = u_4 = 0x33$, $u_3 = 0x8F$, $u_2 = 0x67$, $u_1 = 0x83$, $u_0 = 0x63$. After RS code decoding, it is determined that an error exists based on the error feature, and the found error location is 254.

In the scenario shown in FIG. 9, if a value of either $P_1$ or $P_2$ is 1, U(x) is directly written into the memory rank 1 and the memory rank 2. If both $P_1$ and $P_2$ are 0, RS code encoding is performed on $M_1(x)$ and $M_2(x)$, to obtain an encoded result N(x). The data bit of N(x) includes $N_1(x)$ corresponding to $M_1(x)$ and $N_2(x)$ corresponding to $M_2(x)$. When RS code encoding is performed on $M_1(x)$ and $M_2(x)$, M(x) obtained by combining $M_1(x)$ and $M_2(x)$ is encoded, and $M(x) = x^{36}M_2(x) + x^4M_1(x)$. Correspondingly, the parity bit PAR of N(x) is obtained by performing RS code encoding on M(x).

Case 1 shown in FIG. 9 is a case in which $P_1 = P_2 = 1$. Case 2 is a case in which $P_1 = 0$ and $P_2 = 1$. Case 3 is a case in which $P_1 = 1$ and $P_2 = 0$. Processing results in case 1 to case 3 are that U(x) is directly written into the memory rank 1 and the memory rank 2.

Case 4 is a case in which $P_1 = P_2 = 0$. In this case, the data written into the memory rank 1 and the memory rank 2 is $N_1(x)$, $N_2(x)$, and PAR.

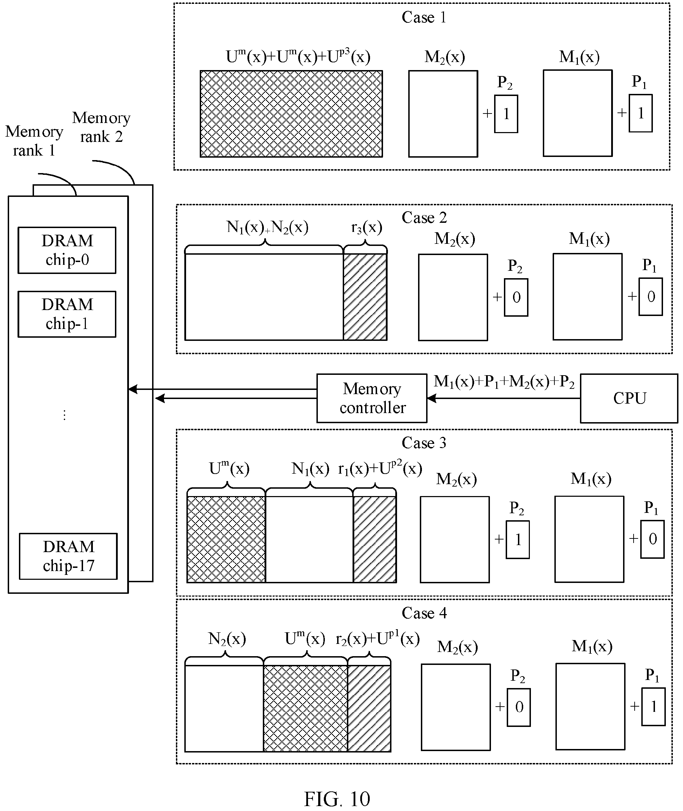

**[0114]** FIG. 10 is a schematic diagram of still another data storage method according to an embodiment of this application. FIG. 10 shows a process of storing data in a degraded scenario.

Similar to FIG. 9, in FIG. 10, a length of poison data indication information is also 2 bits. Therefore, it is still assumed that two letters $P_1$ and $P_2$ are used to represent two pieces of poison data indication information. $P_1$ and $P_2$ may separately correspond to one piece of target data output by the CPU. $P_1$ may be referred to as first poison data indication information, $P_2$ may be referred to as second poison data indication information, target data corresponding to $P_1$ may be referred to as first target data, and target data corresponding to $P_2$ may be referred to as second target data.

It is assumed that $P_1 = 1$, it indicates that the first target data is the poison data. If $P_1 = 0$, it indicates that the first target data is not the poison data. If $P_2 = 1$, it indicates that the second target data is the poison data. If $P_2 = 0$, it indicates that the second target data is not the poison data.

In FIG. 10, the first target data is denoted by $M_1(x)$, and the second target data is denoted by $M_2(x)$.

A difference from the scenario shown in FIG. 9 lies in that, in the scenario shown in FIG. 10, the memory controller may store three pieces of preset data. For ease of description, the three pieces of preset data may be separately referred to as first preset data, second preset data, and third preset data. The first preset data is used when $P_1 = P_2 = 1$ (that is, case 1 shown in FIG. 10). The second preset data is used when $P_1 = 0$ and $P_2 = 1$ (that is, case 2 shown in FIG. 10). The third preset data is used when $P_1 = 1$ and $P_2 = 0$ (that is, case 3 shown in FIG. 10).

The first preset data may be represented by $U_{11}(x)$. $U_{11}(x)$ meets formula 2:

$$U_{11}(x) = x^{36}U^m(x) + x^4U^m(x) + U^{p3}(x), \text{ formula 2.}$$

The second preset data may be represented by $U_{01}(x)$. $U_{01}(x)$ meets formula 3:

$$U_{01}(x) = x^{36}U^0(x) + x^4U^m(x) + U^{p1}(x), \text{ formula 3.}$$

The third preset data may be represented by $U_{10}(x)$. $U_{10}(x)$ meets formula 4:

$$U_{10}(x) = x^{36}U^m(x) + x^4U^0(x) + U^{p2}(x), \text{ formula 4.}$$

$U^m(x)$ in formula 2 to formula 4 is a polynomial with degree is 31, and each coefficient is one symbol (8 bits). Therefore, there are 32 symbols in total. $U^0(x)$ is a zero polynomial with a degree of 31, and each coefficient is one symbol (8 bits). Therefore, there are 32 symbols in total. $U^{p1}(x)$, $U^{p2}(x)$, and $U^{p3}(x)$ are all polynomials with a degree of 3, and each coefficient is one symbol. Therefore, there are four symbols in total. $U_{01}(x)$, $U_{10}(x)$, and $U_{11}(x)$ are polynomials with a degree of 67, and a total of 68 symbols ($68 \times 8 = 544$ bits) can be selected in advance and stored in the memory controller.

$U_{01}(x)$ includes data $U^m(x)$ to be written into a first data block, data $U^0(x)$ to be written into a second data block, and data $U^{p1}(x)$ to be written into a parity bit. $U_{10}(x)$ includes data $U^0(x)$ to be written into the first data block, data $U^m(x)$ to be written into the second data block, and data $U^{p2}(x)$ to be written into the parity bit. $U_{11}(x)$ includes data $U^m(x)$ to be written into the first data block, data $U^m(x)$ to be written into the second data block, and data $U^{p3}(x)$ to be written into the parity bit.

Similarly, $U_{01}(x)$, $U_{10}(x)$, and $U_{11}(x)$ may be valid codewords, or may be invalid codewords. $U^m(x) = u_{31}x^{31} + u_{30}x^{30} + ... + u_1x + u0$, $u_{31} = u_{30} = ... = u_0 = 0x33$, $U^{p1}(x) = 0x71 x3 + 0x89 x2 + 0xF6 x + 0x06$, $U^{p2}(x) = 0xB9 x3 + 0x24 x2 + 0xF6 x + 0x7B$, $U^{p3}(x) = 0xC8 x3 + 0xAD x2 + 0x00 x + 0x7D$ is given in this embodiment. After $U_{01}(x)$, $U_{10}(x)$, and $U_{11}(x)$ are decoded by using RS code, an error is determined based on an error feature, and a found error location is 254.

The following describes two simplest cases: case 1 and case 4.

Case 1 is that $P_1 = 1$ and $P_2 = 1$. In this case, both $M_1(x)$ and $M_2(x)$ are poison data. Therefore, the memory controller may directly write the first preset data, that is, $U_{11}(x)$, into the memory rank 1 and the memory rank 2.

Case 2 is that $P_1 = 0$ and $P_2 = 0$. In this case, neither $M_1(x)$ nor $M_2(x)$ are poison data. Therefore, the memory controller may code $M_1(x)$ and $M_2(x)$ to obtain encoded data, and write the encoded data into the memory rank 1 and the memory rank 2. The encoded data includes the data bit and the parity bit, where the data bit includes $N_1(x)$ corresponding to $M_1(x)$, and $N_2(x)$ corresponding to $M_2(x)$. When RS code encoding is performed on $M_1(x)$ and $M_2(x)$, $M(x)$ obtained by combining $M_1(x)$ and $M_2(x)$ is encoded, and $M(x) = x^{36}M_2(x) + x^4M_1(x)$. Correspondingly, a parity bit $r_3(x)$ in the encoded data is obtained by performing RS code encoding on $M(x)$.

Case 3 is that $P_1 = 0$ and $P_2 = 1$. In this case, $M_1(x)$ is not poison data and $M_2(x)$ is poison data. Therefore, the memory controller may determine a long $M(x) = x^{36}M_2(x) + x^4M_1(x)$, and then replace an $M_2(x)$ part in $M(x)$ with all-zero data to obtain $M(x) = x^4M_1(x)$. Then, the memory controller codes $M(x)$, and adds an encoding result to $U_{10}(x)$ to obtain to-be-written data that is written into the memory rank 1 and the memory rank 2. The to-be-written data includes a data bit and a parity bit, where the data bit includes $U^m(x)$ and $N_1(x)$, and $N_1(x)$ is equivalent to data obtained by performing error correction encoding on $M_1(x)$. The data included in an information bit is obtained by summing $r_1(x)$ and $U^{p2}(x)$. Therefore, the information bit is indicated as $r_1(x) + U^{p2}(x)$ in FIG. 10. $r_1(x)$ is the parity bit obtained by performing error correction encoding on $M_1(x)$, and $U^{p2}(x)$ is equivalent to a parity bit included in the third preset data.

Case 4 is similar to case 3, where $P_1 = 1$ and $P_2 = 0$. In this case, $M_1(x)$ is poison data and $M_2(x)$ is not poison data. Therefore, the memory controller may determine a long $M(x) = x^{36}M_2(x) + x^4M_1(x)$, and then replace an $M_1(x)$ part in $M(x)$ with all-zero data to obtain $M(x) = x^{36}M_2(x)$. Then, the memory controller codes $M(x)$, and adds an encoding result to $U_{01}(x)$ to obtain to-be-written data that is written into the memory rank 1 and the memory rank 2. The to-be-written data includes a data bit and a parity bit, where the data bit includes $U^m(x)$ and $N_2(x)$, and $N_2(x)$ is equivalent to data obtained by performing error correction encoding on $M_2(x)$. The data included in an information bit is obtained by summing $r_2(x)$ and $U^{p1}(x)$. Therefore, the information bit is indicated as $r_2(x) + U^{p1}(x)$ in FIG. 10. $r_2(x)$ is the parity bit obtained by performing error correction encoding on $M_2(x)$, and $U^{p1}(x)$ is equivalent to a parity bit included in the second preset data.

In embodiments shown in FIG. 9 and FIG. 10, data to be written into the memory rank 1 and the memory rank 2 may include the data bit and the parity bit. In some embodiments, the data bit may be written into the memory rank 1 and the memory rank 2, and the parity bit may be written into one of the memory rank 1 and the memory rank 2. For example, the parity bit may be written into the memory rank 2. In some other embodiments, both the data bit and the parity bit may be written into the memory rank 1 and the memory rank 2. For example, half of the parity bits may be written into the memory rank 1, and the other half of the parity bits may be written into the memory rank 2.

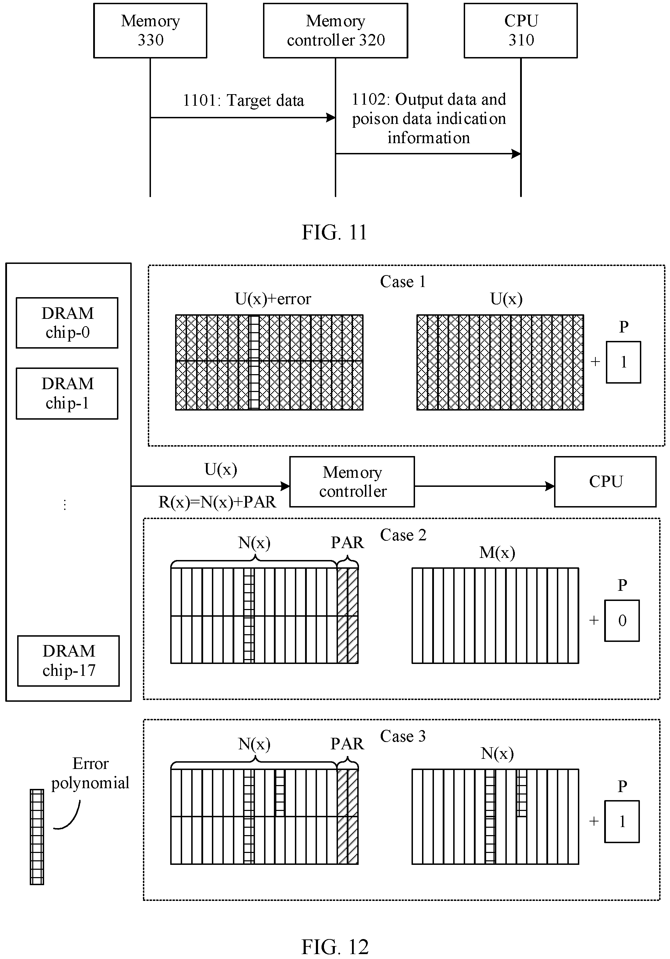

FIG. 11 is a schematic flowchart of a data reading method according to an embodiment of this application. The method shown in FIG. 11 may be implemented by the memory controller 320 shown in FIG. 3 or FIG. 4.

1101: The memory controller 320 obtains target data from the memory 330.

1102: The memory controller 320 determines, based on preset data stored in the storage unit 324, output data to be sent to the CPU 310 and poison data indication information that indicates whether the output data is poison data.

According to the method shown in FIG. 5, the memory controller 320 may determine, based on the preset data stored in the storage unit 324, whether the data from the memory 330 is the poison data. The memory controller 320 outputs corresponding data based on a determining result. Specifically, if the memory controller 320 determines that the target data is not the poison data, error correction decoding is performed on the target data to obtain output data, where the poison data indication information corresponding to the output data indicates that the output data is not the poison data. If the memory controller 320 determines that the target data is the poison data, the memory controller 320 may determine one piece of output data and determine that the poison data indication information corresponding to the output data indicates that the output data is the poison data. According to the method shown in FIG. 11, it may be determined, based on preset data, whether the data output by the memory is the poison data. In this way, storage space of the memory does not need to be occupied to store the poison data indication information. The memory may store data in a manner that does not need to support poison data indication information. In this way, an uncorrectable error caused by occupation of a parity bit does not occur.

The preset data in the method shown in FIG. 11 may be the same as the preset data in the method shown in FIG. 5. Similar to FIG. 5, the method shown in FIG. 11 may also be applied to a non-degraded scenario and a degraded scenario.

Still, an example in which a memory configuration is a 16 + 2 chips configuration, error correction decoding is performed by using RS code, and one symbol includes eight bits is used as an example to describe a data reading method in a non-degraded scenario and a degradation scenario.

FIG. 12 is a schematic diagram of a data reading method according to an embodiment of this application. The method shown in FIG. 12 is a process of reading data in a non-degraded scenario. The data reading method shown in FIG. 12 corresponds to the data storage method shown in FIG. 8. In other words, the data storage method shown in FIG. 8 may be read by using the method shown in FIG. 12.

In the non-degraded scenario, a length of poison data indication information may be 1 bit. It is assumed that a letter P is used to represent the poison data indication information. It is assumed that if P = 1, it indicates that data indicated by the poison data indication information is poison data. If P = 0, it indicates that data indicated by the poison data is not poison data.

M(x) indicates data output to a CPU after error correction decoding, and R(x) indicates data before error correction decoding is performed on M(x) by using RS code (that is, target data output from a memory). The target data R(x) output by the memory may be divided into two parts. A first part is a data bit (which may also be referred to as data for short), and a second part is a parity bit. The data bit is represented by N(x), and the parity bit is represented by PAR.

**[0140]** U(x) represents preset data. For specific content of the preset data, refer to the description in FIG. 8. For brevity, details are not described herein again.

The memory controller determines a Hamming distance (Hamming distance) (which may also be referred to as a "distance" for short) between the target data and the preset data, that is, determines a quantity of non-zero coefficients in $R(x) - U(x)$.

It is assumed that $R(x) = r_{35}x^{35} + r_{34}x^{34} + ... + r_4x^4 + r_3x^3 + r_2x^2 + r_1x + r_0$, $U_{11}(x) = u_{35}x^{35} + u_{34}x^{34} + ... + u_4x^4 + u_3x^3 + u_2x^2 + u_1x + u_0$. In this case, $R(x) - U_{11}(x) = (r_{35} - u_{35})x^{35} + (r_{34} - u_{34})x^{34} + ... + (r_4 - u_4)x^4 + (r_3 - u_3)x^3 + (r_2 - u_2)x^2 + (r_1 - u_1)x + (r_0 - u_0)$.

If the quantity of non-zero coefficients of $R(x) - U(x)$ is less than 3, it may be determined that the target data is poison data. In this case, the memory controller may determine that the output data output to the CPU is the preset data, and P = 1. It may be understood that, because the output data indicated by the poison data indication information is the poison data, the CPU may directly determine, based on the poison data indication information, that the output data is the poison data. If the output data needs to be written back from the CPU into the memory, because P corresponding to the output data is equal to 1, the memory controller also directly writes the preset data into the memory according to the method shown in FIG. 8. Therefore, specific content of the output data has no practical significance for subsequent processing. Therefore, if the memory controller determines that the target data is one piece of poison data, the output data may also be other data. For example, the output data may be R(x) or any group of data.

If the quantity of non-zero coefficients of $R(x) - U(x)$ is greater than or equal to 3, decoding may be performed on the target data, and output data is determined based on a decoding result. If decoding succeeds, the output data is a decoding result, that is, $M(x)$, and $P = 0$. If the decoding fails, the output data may be a data bit in $R(x)$ or any other data, and $P = 1$.

As shown in case 1 in FIG. 12, when $R(x) = U(x) + E(x)$, $E(x) = a_i x^i + a_j x^j$ is represented as an error polynomial (error polynomial) with two wrong symbols, and $a_i \neq 0$ and $a_j \neq 0$ are elements of $GF(2^8)$. Therefore, $R(x) - (x) = E(x) = a_i x^i + a_j x^j$, and non-zero coefficients are $a_i$ and $a_j$. In this case, $d = 2$. In this case, the output data output to the CPU is a data bit part of $U(x)$, and $P$ corresponding to the output data is equal to 1.

The threshold of the Hamming distance is related to a quantity of symbols that can be stored in a DRAM chip. In the foregoing embodiment, one DRAM chip may store two symbols. Therefore, a Hamming distance threshold is set to 3, that is, $N_{SYM} + 1$, where $N_{SYM}$ is a quantity of symbols that can be stored in the one DRAM chip.

Case 2 shown in FIG. 12 is a case in which d is greater than or equal to 3 and decoding succeeds. In this case, the data output to the CPU is a decoded result $M(x)$, and $P = 0$.

Case 3 shown in FIG. 12 is a case in which d is greater than or equal to 3 but decoding fails. In this case, the data output to the CPU is a data bit of $R(x)$, and $P = 1$.

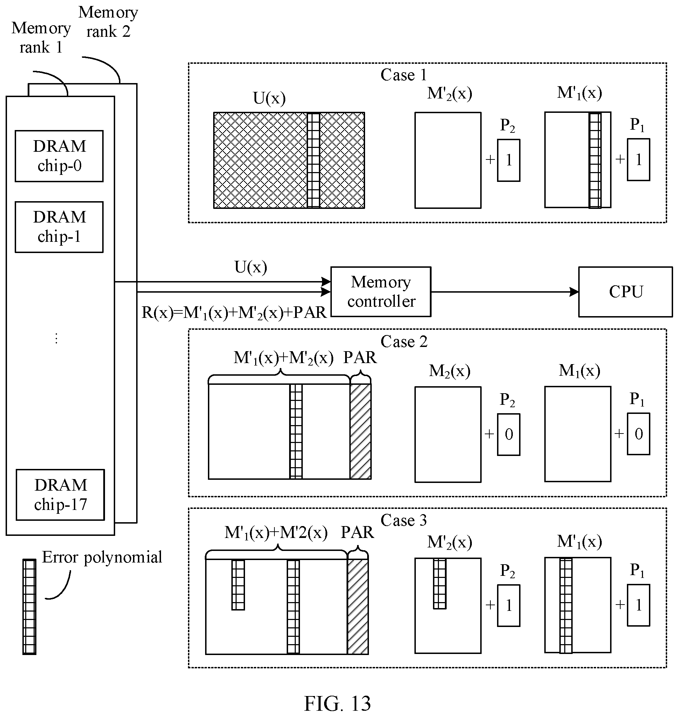

FIG. 13 is a schematic diagram of another data reading method according to an embodiment of this application. FIG. 13 shows a process of storing data in a degraded scenario. The data reading method shown in FIG. 13 corresponds to the data storage method shown in FIG. 9. In other words, the data storage method shown in FIG. 9 may be read by using the method shown in FIG. 13.

In the degraded scenario, a length of poison data indication information may be 2 bit. It is assumed that a letter P is used to represent poison data indication information, and $P = P_1 P_2$. $P_1$ and $P_2$ may each correspond to one piece of output data. For ease of description, $P_1$ may be referred to as first poison data indication information, $P_2$ may be referred to as second poison data indication information, output data corresponding to $P_1$ may be referred to as first output data, and target data corresponding to $P_2$ may be referred to as second output data.

It is assumed that $P_1 = 1$, it indicates that the first output data is the poison data. If $P_1 = 0$, it indicates that the first output data is not the poison data. If $P_2 = 1$, it indicates that the second output data is the poison data. If $P_2 = 0$, it indicates that the second output data is not the poison data.

In FIG. 13, the target data output by the memory may be represented by $R(x)$. $R(x)$ includes first target data and second target data, where the first target data is represented by $M'_1(x)$, and the second target data is represented by $M'_2(x)$.

In FIG. 13, $U(x)$ is still used to represent preset data. For specific content of the preset data, refer to the description in FIG. 9. For brevity, details are not described herein again.

The memory controller still determines the Hamming distance between the target data and the preset data based on $R(x)$ and $U(x)$. Specifically, the memory controller determines a quantity of non-zero coefficients in $R(x) - U(x)$. If the quantity of non-zero coefficients is less than or equal to 2, the memory controller may determine that both the first target data and the second target data are the poison data. In this case, the memory controller may determine the first output data and the second output data, and $P_1 = P_2 = 1$. Similarly, because the output data indicated by the poison data indication information is the poison data, the CPU may directly determine, based on the poison data indication information, that the output data is the poison data. If the output data needs to be written back from the CPU into the memory, because P corresponding to the output data is equal to 1, the memory controller also directly writes the preset data into the memory according to the method shown in FIG. 9. Therefore, specific content of the output data has no practical significance for subsequent processing. Therefore, if the memory controller determines that the target data is one piece of poison data, the output data may also be other data. For example, the first output data may be $M'_1(x)$ or any group of data, and the second output data may be $M'_2(x)$ or any group of data.

If the quantity of non-zero coefficients is greater than or equal to 3, the target data is decoded. If decoding succeeds, the output data is a decoding result, that is, $M(x)$, and $P_1 = P_2 = 0$. If decoding fails, the output data may be a data bit in $R(x)$ or any other data, and $P_1 = P_2 = 1$.

As shown in case 1 in FIG. 13, when $R(x) = U(x) + E(x)$, $E(x) = a_i x^i + a_j x^j$ is represented as an error polynomial (error polynomial) with two wrong symbols, and $a_i \neq 0$ and $a_j \neq 0$ are elements of $GF(2^8)$. Therefore, $R(x) - (x) = E(x) = a_i x^i + a_j x^j$, and non-zero coefficients are $a_i$ and $a_j$. In this case, $d = 2$. In this case, the output data output to the CPU is $M'_1(x)$ and $M'_2(x)$, and $P_1 = P_2 = 1$.

Case 2 shown in FIG. 13 is a case in which d is greater than or equal to 3 and decoding succeeds. In this case, the data output to the CPU is decoded results $M_1(x)$ and $M_2(x)$, and $P_1 = P_2 = 0$.

Case 3 shown in FIG. 13 is a case in which d is greater than or equal to 3 but decoding fails. In this case, the data output to the CPU is a data bit of $R(x)$, and $P_1 = P_2 = 1$.

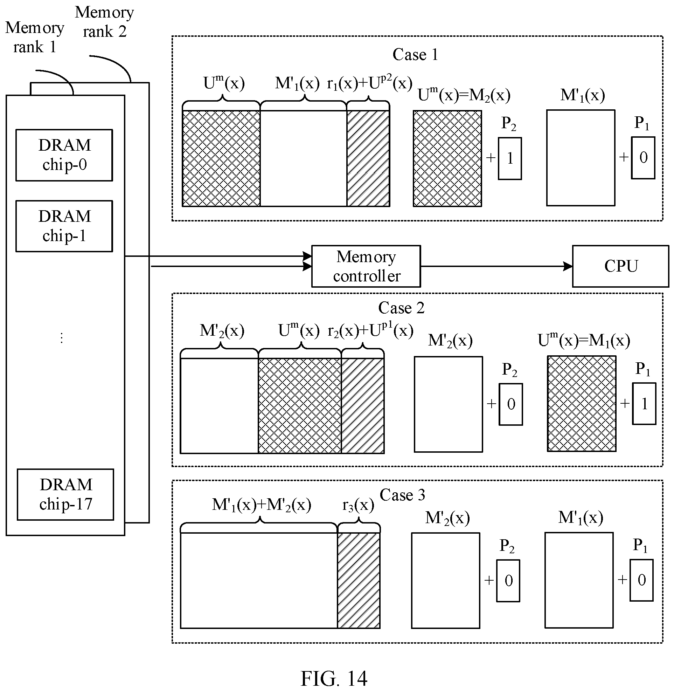

FIG. 14 is a schematic diagram of still another data reading method according to an embodiment of this application. FIG. 14 shows a process of storing data in a degraded scenario. The data reading method shown in FIG. 14 corresponds to the data storage method shown in FIG. 10. In other words, the data storage method shown in FIG. 10 may be read by using the method shown in FIG. 14.

Similar to FIG. 13, in FIG. 14, a length of poison data indication information is also 2 bits. Therefore, it is still assumed that a letter P is used to represent poison data indication information, and $P = P_1P_2$. $P_1$ and $P_2$ may each correspond to one piece of output data. For ease of description, $P_1$ may be referred to as first poison data indication information, $P_2$ may be referred to as second poison data indication information, output data corresponding to $P_1$ may be referred to as first output data, and target data corresponding to $P_2$ may be referred to as second output data.

It is assumed that $P_1 = 1$, it indicates that the first target data is the poison data. If $P_1 = 0$, it indicates that the first target data is not the poison data. If $P_2 = 1$, it indicates that the second target data is the poison data. If $P_2 = 0$, it indicates that the second target data is not the poison data.

It is assumed that $P_1 = 1$, it indicates that the first output data is the poison data. If $P_1 = 0$, it indicates that the first output data is not the poison data. If $P_2 = 1$, it indicates that the second output data is the poison data. If $P_2 = 0$, it indicates that the second output data is not the poison data.

In FIG. 14, the target data output by the memory may be represented by $R(x)$. $R(x)$ includes first target data and second target data, where the first target data is represented by $M'_1(x)$, and the second target data is represented by $M'_2(x)$.

A difference from the scenario shown in FIG. 13 lies in that, in the scenario shown in FIG. 14, the memory controller may store three pieces of preset data. For ease of description, the three pieces of preset data may be separately referred to as first preset data, second preset data, and third preset data. For specific content of the first preset data, the second preset data, and the third preset data, refer to the description in FIG. 10. For brevity, details are not described herein again.

In the scenario shown in FIG. 14, if the memory controller determines that the data stored in the memory is not the poison data, the memory controller may directly output the data without performing error correction decoding.

The memory controller calculates an error feature of the target data (which may be referred to as a first error feature), an error feature of the second preset data (which may be referred to as a second error feature), and an error feature of the third preset data (which may be referred to as a third error feature).

For ease of description, the first error feature is represented by $S_R(x)$, the second error feature is represented by $S_{01}(x)$, and the third error feature is represented by $S_{10}(x)$. $S_{01}(x) = 0x01x^3 + 0x02x^2 + 0x04x + 0x08$, and $S_{10}(x) = 0x02x^3 + 0x04x^2 + 0x08x + 0x10$.

Case 1 shown in FIG. 14 is a case when $S_R(x) = S_{10}(x)$. In this case, the first target data in $R(x)$ is not the poison data and the first target data does not need to be corrected. Therefore, the first output data $M_1(x)$ corresponding to the first target data is equal to $M'_1(x)$. The second target data in $R(x)$ is the poison data. Therefore, the second output data $M_2(x)$ corresponding to the second target data is equal to $U^m(x)$. Correspondingly, first poison data indication information $P_1$ that indicates whether the first output data is the poison data is equal to 0, and second poison data indication information $P_2$ that indicates whether the second output data is the poison data is equal to 1.

Case 2 shown in FIG. 14 is a case when $S_R(x) = S_{01}(x)$. In this case, the first target data in $R(x)$ is the poison data. Therefore, the first output data $M1(x)$ corresponding to the first target data is equal to $U^m(x)$. The second target data in $R(x)$ is not the poison data, and error correction does not need to be performed on the second target data. Therefore, the second output data $M2(x)$ corresponding to the second target data is equal to $M'_2(x)$. Correspondingly, first poison data indication information $P_1$ that indicates whether the first output data is the poison data is equal to 1, and second poison data indication information $P_2$ that indicates whether the second output data is the poison data is equal to 0.

Case 3 shown in FIG. 14 is a case when $S_R(x) = 0$ (that is, the first error feature is an all-zero polynomial). In this case, the first target data in $R(x)$ is not the poison data and the first target data does not need to be corrected. Therefore, the first output data $M_1(x)$ corresponding to the first target data is equal to $M'_1(x)$. The second target data in $R(x)$ is not the poison data, and error correction does not need to be performed on the second target data. Therefore, the second output data $M2(x)$ corresponding to the second target data is equal to $M'_2(x)$. Correspondingly, first poison data indication information $P_1$ that indicates whether the first output data is the poison data is equal to 0, and second poison data indication information $P_2$ that indicates whether the second output data is the poison data is equal to 0.

In some embodiments, if the first error feature is not an all-zero polynomial, the output data includes the first target data and the second target data. However, in this case (referred to as case 4), an error (error) that needs to be corrected may occur in the first target data and the second target data. Therefore, $P_1 = P_2 = 1$.

In some embodiments, if the first error feature is not equal to the second error feature and the first error feature is not equal to the third error feature, the output data includes the first target data and the second target data. However, in this case (referred to as case 5), an error (error) that needs to be corrected may occur in the first target data and the second target data. Therefore, $P_1 = P_2 = 1$.

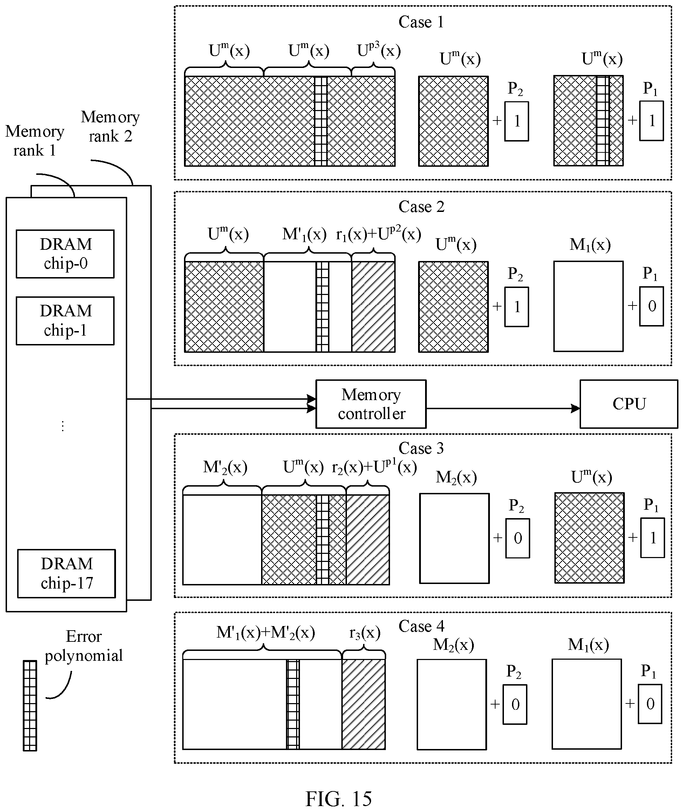

In some other embodiments, for case 4 and/or case 5, error correction decoding may be further performed to obtain the output data. For a specific error correction decoding process, refer to FIG. 15.

It will be understood that the poison data (for example, the second output data) in case 1 and the poison data (for example, the first output data) in case 2 shown in FIG. 14 are $U^m(x)$. As described above, when the memory controller reads the poison data from the CPU again, because the poison data indication information corresponding to the poison data is 1, the memory controller may write the preset data into the memory. Therefore, the poison data in case 1 and case 2 may also be any other data.

FIG. 15 is a schematic diagram of yet another data reading method according to an embodiment of this application. FIG. 15 shows a process of storing data in a degraded scenario. The data reading method shown in FIG. 15 corresponds to the data storage method shown in FIG. 10. In other words, the data storage method shown in FIG. 10 may be read by using the method shown in FIG. 15.

Similar to FIG. 13, in FIG. 15, a length of poison data indication information is also 2 bits. Therefore, it is still assumed that a letter P is used to represent poison data indication information, and $P = P_1P_2$. $P_1$ and $P_2$ may each correspond to one piece of output data. For ease of description, $P_1$ may be referred to as first poison data indication information, $P_2$ may be referred to as second poison data indication information, output data corresponding to $P_1$ may be referred to as first output data, and target data corresponding to $P_2$ may be referred to as second output data.

It is assumed that $P_1 = 1$, it indicates that the first target data is the poison data. If $P_1 = 0$, it indicates that the first target data is not the poison data. If $P_2 = 1$, it indicates that the second target data is the poison data. If $P_2 = 0$, it indicates that the second target data is not the poison data.

It is assumed that $P_1 = 1$, it indicates that the first output data is the poison data. If $P_1 = 0$, it indicates that the first output data is not the poison data. If $P_2 = 1$, it indicates that the second output data is the poison data. If $P_2 = 0$, it indicates that the second output data is not the poison data.

In FIG. 15, the target data output by the memory may be represented by R(x). R(x) includes first target data and second target data, where the first target data is represented by $M'_1(x)$, and the second target data is represented by $M'_2(x)$.

A difference from the scenario shown in FIG. 13 lies in that, in the scenario shown in FIG. 15, the memory controller may store three pieces of preset data. For ease of description, the three pieces of preset data may be separately referred to as first preset data, second preset data, and third preset data. For specific content of the first preset data, the second preset data, and the third preset data, refer to the description in FIG. 10. For brevity, details are not described herein again.

In the scenario shown in FIG. 15, the memory controller may determine, based on a Hamming distance between the target data and the preset data, whether to perform error correction decoding.

The memory controller calculates an error feature of the target data (which may be referred to as a first error feature), an error feature of the second preset data (which may be referred to as a second error feature), and an error feature of the third preset data (which may be referred to as a third error feature).

For ease of description, the first error feature is represented by $S_R(x)$, the second error feature is represented by $S_{01}(x)$, and the third error feature is represented by $S_{10}(x)$.

Case 1 shown in FIG. 15 is a case in which a Hamming distance (that is, $R(x) - U_{11}(x)$) between the target data and the first preset data is less than 3. In this case, the memory controller may determine that both the first target data and the second target data are the poison data. Therefore, the first output data $M_1(x)$ corresponding to the first target data is equal to $U^m(x)$. The second output data $M_2(x)$ corresponding to the second target data is equal to $U^m(x)$. Correspondingly, first poison data indication information $P_1$ that indicates whether the first output data is the poison data is equal to 1, and second poison data indication information $P_2$ that indicates whether the second output data is the poison data is equal to 1.

Case 2 to case 4 shown in FIG. 15 are cases in which the Hamming distance between the target data and the first preset data is greater than or equal to 3. More specifically, case 2 to case 4 are determined based on the following three groups of 64 + 4 RS code error correction decoding results.

First group: Perform error correction decoding of the RS code based on $S_R(x) - S_{10}(x)$.

Second group: Perform error correction decoding of the RS code based on $S_R(x) - S_{01}(x)$.

Third group: Perform error correction decoding of the RS code based on $S_R(x)$.

It should be noted that existing RS decoding generally includes the following steps.

Step 1: Calculate an error feature (syndrome).

Step 2: Search for an error location polynomial based on the error feature.

Step 3: Search for an error value polynomial based on the error feature and an error polynomial.

Step 4: Search for an error location and a corresponding error value of the error location based on the error location polynomial and error value polynomial, and correct the error value.

In the first group of error correction decoding, "performing error correction decoding of the RS code based on $S_R(x) - S_{10}(x)$" refers to calculating an error feature in a first step of completing the foregoing RS decoding based on $S_R(x) - S_{10}(x)$. In other words, in the first group of error correction decoding, the error feature is obtained by subtracting the first error feature from the third error feature, where the error feature is an error feature that needs to be calculated in the first step in the RS decoding process. The subsequent steps are the same as the existing RS decoding steps.

Similarly, in the first group of error correction decoding, "performing error correction decoding of the RS code based on $S_R(x) - S_{01}(x)$" refers to calculating an error feature in a first step of completing the foregoing RS decoding based on $S_R(x) - S_{01}(x)$. In other words, in the second group of error correction decoding, the error feature is obtained by subtracting the first error feature from the second error feature, where the error feature is an error feature that needs to be calculated in the first step in the RS decoding process. The subsequent steps are the same as the existing RS decoding steps.

Case 2 shown in FIG. 15 is a case in which only the first group of decoding succeeds. In this case, the first target data in R(x) is decoded. Therefore, the first output data $M_1(x)$ corresponding to the first target data is a 64 + 4 RS code error correction decoding result for $M'_1(x)$. The second target data in R(x) is the poison data. Therefore, the second output data $M_2(x)$ corresponding to the second target data is equal to $U^m(x)$. Correspondingly, first poison data indication information $P_1$ that indicates whether the first output data is the poison data is equal to 0, and second poison data indication information $P_2$ that indicates whether the second output data is the poison data is equal to 1. In case 2, because the first output data is a decoding result of error correction decoding performed on the first target data, the first output data may also be referred to as first decoded data.

Case 3 shown in FIG. 15 is a case in which only the second group of decoding succeeds. In this case, the second target data in R(x) is decoded. Therefore, the second output data $M_2(x)$ corresponding to the second target data is a 64 + 4 RS code error correction decoding result for $M'_2(x)$. The first target data in R(x) is the poison data. Therefore, the second output data $M_1(x)$ corresponding to the second target data is equal to $U^m(x)$. Correspondingly, first poison data indication information $P_1$ that indicates whether the first output data is the poison data is equal to 1, and second poison data indication information $P_2$ that indicates whether the second output data is the poison data is equal to 0. In case 3, because the second output data is a decoding result of error correction decoding performed on the second target data, the second output data may also be referred to as second decoded data.

Case 4 shown in FIG. 15 is a case in which only the third group of decoding succeeds. In this case, both the first target data and the second target data in R(x) are decoded. Therefore, the first output data $M_1(x)$ corresponding to the first target data is a 64 + 4 RS code error correction decoding result for $M'_1(x)$. The second output data $M_2(x)$ corresponding to the second target data is a 64 + 4 RS code error correction decoding result for $M'_2(x)$. The first target data in R(x) is the poison data. Correspondingly, first poison data indication information $P_1$ that indicates whether the first output data is the poison data is equal to 0, and second poison data indication information $P_2$ that indicates whether the second output data is the poison data is equal to 0. In case 4, because the first output data is a decoding result of error correction decoding performed on the first target data, the first output data may also be referred to as first decoded data. Similarly, because the second output data is a decoding result of error correction decoding performed on the second target data, the second output data may also be referred to as second decoded data.

In addition, (that is, any two groups of the foregoing three groups of decoding succeed or all fail), then $P_1 = P_2 = 1$. The poison data output by the memory controller may be the same as that in case 1, or may be any other data.

Similarly, when the memory controller reads the poison data from the CPU again, because the poison data indication information corresponding to the poison data is 1, the memory controller may write the preset data into the memory. Therefore, the poison data output to the memory shown in FIG. 15 may also be any other data.

Both FIG. 14 and FIG. 15 are applied to a degraded scenario that includes three pieces of preset data. In the solution of FIG. 14, error detection is performed only on the target data, and then the target data is output. In the solution of FIG. 15, error correction is performed on the target data, and then the target data is output.

In some embodiments, the memory controller may perform only the method shown in FIG. 14. In this way, although the memory controller does not perform error correction on the target data, the memory controller can output the data in the memory to the CPU more quickly. In other words, only executing FIG. 14 can reduce a memory-to-CPU latency.

In some other embodiments, the memory controller may perform only the method shown in FIG. 15. In this case, the memory controller may perform error correction on the target data, so that some correctable errors can be avoided.

In some other embodiments, the memory controller may simultaneously perform the methods shown in FIG. 14 and FIG. 15. In this way, the memory controller can achieve both low latency and error correctable effects.

In embodiments in FIG. 13 to FIG. 15, the first target data and the second target data may be obtained from the memory rank 1 and the memory rank 2. Parity data that needs to be used in a decoding process of the first target data and the second target data is obtained.

A person skilled in the art may understand that the foregoing embodiment is described by using the CPU as an example of the processor. In the foregoing embodiment, the CPU may also be replaced with another processor that can write data to or read data from the memory by using the memory controller, for example, may also be a network processor (network processor, NP), or may be a digital signal processor (digital signal processor, DSP). Alternatively, the processor may be a micro controller unit (micro controller unit, MCU), a programmable logic device (programmable logic device, PLD), or the like.

In the foregoing technical solution, the poison data can be indicated without sacrificing a parity bit. Therefore, according to the foregoing technical solution, the poison data stored in the memory can be identified, and a problem that an error correction capability is degraded due to sacrifice of the parity bit is avoided.

The foregoing embodiment is used as an example. One DRAM chip in the foregoing embodiment may store data of two symbols. Therefore, the foregoing embodiment can correct errors of most of any two symbols. However, in the conventional technology, because one bit is used as the poison data indication information, errors of two random symbols that are not in a same column cannot be corrected.

In addition, in the foregoing technical solution, if a Hamming distance between the data read from the memory and the preset data is less than a preset threshold, the data may still be identified as the poison data. In this way, when a quantity of error symbols of the poison data is less than or equal to $N_{SYM}$, the data can still be identified as the poison data. $N_{SYM}$ is a quantity of symbols that can be stored in a DRAM chip. The preset threshold is equal to $N_{SYM} + 1$.

Further, according to the methods shown in FIG. 14 and FIG. 15, the poison data indication information of the poison data of the two pieces of target data can be distinguished, so that an error correction capability can be further improved, and more accurate information can be provided to the chip.

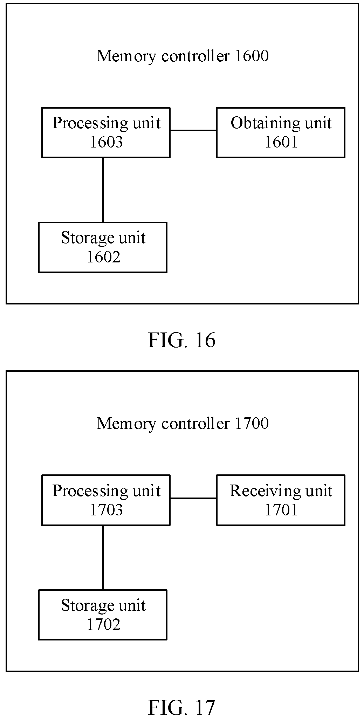

FIG. 16 is a schematic block diagram of a structure of a memory controller according to an embodiment of this application. A memory controller 1600 shown in FIG. 16 includes an obtaining unit 1601, a storage unit 1602, and a processing unit 1603.

The obtaining unit 1601 is configured to obtain output data from a processor, where the output data includes target data to be written into a memory and poison data indication information corresponding to the target data, and the poison data indication information indicates whether the target data is poison data.

The storage unit 1602 is configured to store preset data.

The processing unit 1603 is configured to write, based on the poison data indication information, the preset data stored in the storage unit 1602 into the memory, or write to-be-written data determined based on the target data into the memory.

For specific functions and beneficial effects of the obtaining unit 1601, the storage unit 1602, and the processing unit 1603, refer to the foregoing embodiment.

The memory controller 1600 shown in FIG. 16 may be the memory controller 320 shown in FIG. 4. Correspondingly, the obtaining unit 1601 may be the CPU interface unit 323, the processing unit 1603 may include the ECC unit 321 and the memory interface unit 322, and the storage unit 1602 may be the storage unit 324.

FIG. 17 is a schematic block diagram of a structure of a memory controller according to an embodiment of this application. A memory controller 1700 shown in FIG. 17 includes a receiving unit 1701, a storage unit 1702, and a processing unit 1703.

The receiving unit 1701 is configured to receive target data from a memory.

The storage unit 1702 is configured to store preset data.

The processing unit 1703 is configured to determine, based on the preset data stored in the storage unit 1702 and the target data received by the receiving unit 1701, output data to be sent to a processor and poison data indication information that indicates whether the output data is poison data.

For specific functions and beneficial effects of the receiving unit 1701, the storage unit 1702, and the processing unit 1703, refer to the foregoing embodiment.

The memory controller 1700 shown in FIG. 17 may be the memory controller 320 shown in FIG. 4. Correspondingly, the receiving unit 1701 may be the memory interface unit 322, the processing unit 1603 may include the ECC unit 321 and the CPU interface unit 323, and the storage unit 1602 may be the storage unit 324.

It should be understood that the foregoing memory controller (for example, the memory controller 1600 or the memory controller 1700) may alternatively include a logic circuit. The logic circuit is configured to be coupled to an input/output interface, and transmit data through the input/output interface, to perform the method in any one of the foregoing embodiments.

The data storage method shown in FIG. 5 and the data reading method shown in FIG. 11 may be implemented by a same memory controller. Correspondingly, the memory controller 1600 and the memory controller 1700 may be a same memory controller.

Embodiments of this application further provide a computer apparatus. The computer apparatus includes a processor. The processor is configured to be coupled to a memory, and read and execute instructions and/or program code in the memory, to perform the method in any one of the foregoing embodiments.

Embodiments of this application further provide a memory controller. The chip system includes a logic circuit. The logic circuit is configured to be coupled to an input/output interface, and transmit data through the input/output interface, to perform the method in any one of the foregoing embodiments.

Embodiments of this application further provide a computer device. The computer device may be a computer device such as a computer, a mobile phone, or a server. The computer device may include a processor, a memory, and the foregoing memory controller. For example, the computer device may be the computer device 300 shown in FIG. 3.

In an implementation process, the steps in the foregoing methods may be completed by using a hardware integrated logic circuit in the processor, or by using instructions or program code in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be completed by using a hardware integrated logic circuit in the processor, or by using instructions or program code in a form of software. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

According to the method provided in embodiments of this application, this application further provides a computer program product. The computer program product includes computer program code. When the computer program code is run on a computer, the computer is enabled to perform the method in any one of the foregoing embodiments.

According to the method provided in embodiments of this application, this application further provides a computer-readable medium, where the computer-readable medium stores program code. When the program code is run on a computer, the computer is enabled to perform the method in any one of the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding procedure in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions or program code for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement that can be readily figured out by the person skilled in the art within the technical scope disclosed in this application shall fall within the protection scope of this application. Therefore, the protection scope of this application shall be subject to the protection scope of the claims.

**Claims**

**1.** A data storage method, wherein the method comprises:

obtaining output data from a processor, wherein the output data comprises target data to be written into a memory and poison data indication information corresponding to the target data, and the poison data indication information indicates whether the target data is poison data; and

writing preset data into the memory based on the poison data indication information, or writing to-be-written data determined based on the target data into the memory.

2. The method according to claim 1, wherein the preset data is an invalid codeword.

3. The method according to claim 1 or 2, wherein the writing preset data into the memory based on the poison data indication information, or writing to-be-written data determined based on the target data into the memory comprises:

when the poison data indication information indicates that the target data is the poison data, writing the preset data into the memory; and

when the poison data indication information indicates that the target data is not the poison data, performing error correction encoding on the target data to obtain the to-be-written data, and writing the to-be-written data into the memory.

4. The method according to claim 1 or 2, wherein the memory comprises a first memory rank and a second memory rank, the target data comprises first target data and second target data, and the poison data indication information comprises first poison data indication information corresponding to the first target data and second poison data indication information corresponding to the second target data; and

the writing preset data into the memory based on the poison data indication information, or writing to-be-written data determined based on the target data into the memory comprises:

when the first poison data indication information indicates that the first target data is the poison data or the second poison data indication information indicates that the second target data is the poison data, writing the preset data into the first memory rank and the second memory rank; and

when the first poison data indication information indicates that the first target data is not the poison data and the second poison data indication information indicates that the second target data is not the poison data, performing error correction encoding on the first target data and the second target data to obtain the to-be-written data, and writing the to-be-written data into the first memory rank and the second memory rank.

5. The method according to claim 1 or 2, wherein the memory comprises a first memory rank and a second memory rank, the target data comprises first target data and second target data, the poison data indication information comprises first poison data indication information corresponding to the first target data and second poison data indication information corresponding to the second target data, and the preset data comprises first preset data, second preset data, and third preset data; and

the writing preset data into the memory based on the poison data indication information, or writing to-be-written data determined based on the target data into the memory comprises:

when the first poison data indication information indicates that the first target data is the poison data and the second poison data indication information indicates that the second target data is the poison data, writing the first preset data into the first memory rank and the second memory rank;

when the first poison data indication information indicates that the first target data is not the poison data and the second poison data indication information indicates that the second target data is not the poison data, performing error correction encoding on the first target data and the second target data to obtain the to-be-written data, and writing the to-be-written data into the first memory rank and the second memory rank;

when the first poison data indication information indicates that the first target data is the poison data and the second poison data indication information indicates that the second target data is not the poison data, determining the to-be-written data based on the second target data and the second preset data, and writing the to-be-written data into the first memory rank and the second memory rank; and

when the first poison data indication information indicates that the first target data is not the poison data and the second poison data indication information indicates that the second target data is the poison data, determining the to-be-written data based on the first target data and the third preset data, and writing the to-be-written data into the first memory rank and the second memory rank.

6. The method according to claim 5, wherein the determining the to-be-written data based on the second target data and the second preset data comprises:

performing N + M error correction encoding on first combined data to obtain a first encoding result, wherein the first combined data is $x^{N/2} + {}^{M}M_2(x)$, $M_2(x)$ is the second target data, and N and M are positive integers; and
adding the first encoding result and the second preset data to obtain the to-be-written data; and
the determining the to-be-written data based on the first target data and the third preset data comprises:

performing N + M error correction encoding on second combined data to obtain a second encoding result, wherein the first combined data is $x^{M}M_1(x)$, and $M_1(x)$ is the first target data; and
adding the second encoding result and the third preset data to obtain the to-be-written data.

7. A data reading method, wherein the method comprises:

receiving target data from a memory; and
determining, based on preset data and the target data, output data to be sent to a processor and poison data indication information that indicates whether the output data is poison data.

8. The method according to claim 7, wherein the determining, based on preset data and the target data, output data to be sent to a processor and poison data indication information that indicates whether the output data is poison data comprises:

determining whether a Hamming distance between the target data and the preset data is less than a preset threshold;
if the Hamming distance is less than the preset threshold, determining that the output data is first data, and the poison data indication information indicates that the first data is the poison data;
if the Hamming distance is greater than or equal to the preset threshold, performing error correction decoding on the target data;
if decoding succeeds, determining that the output data is decoded data, the poison data indication information indicates that the decoded data is not the poison data, and the decoded data is data obtained by performing error correction decoding on the target data; and
if decoding fails, determining that the output data is second data, and the poison data indication information indicates that the second data is the poison data.

9. The method according to claim 7, wherein the memory comprises a first memory rank and a second memory rank, and the target data comprises first target data and second target data; and
the determining, based on preset data and the target data, output data to be sent to a processor and poison data indication information that indicates whether the output data is poison data comprises:

determining whether a Hamming distance between the target data and the preset data is less than a preset threshold;
if the Hamming distance is less than the preset threshold, determining that the output data is first data, and the poison data indication information indicates that the first data is the poison data;
if the Hamming distance is greater than or equal to the preset threshold, performing error correction decoding on the target data;
if decoding succeeds, determining that the output data comprises first decoded data and second decoded data, the poison data indication information indicates that the first decoded data and the second decoded data are not the poison data, the first decoded data corresponds to the first target data, and the second decoded data corresponds to the second target data; and
if decoding fails, determining that the output data comprises second data and third data, and the output data indicates that the second data and the third data are not the poison data.

10. The method according to claim 7, wherein the memory comprises a first memory rank and a second memory rank, the target data comprises first target data and second target data, and the preset data comprises first preset data, second preset data, and third preset data; and
the determining, based on preset data and the target data, output data to be sent to a processor and poison data indication information that indicates whether the output data is poison data comprises:

determining whether a Hamming distance between the target data and the preset data is less than a preset threshold;
if the Hamming distance is less than the preset threshold, determining that the output data comprises third data and fourth data, and the poison data indication information indicates that the third data and the fourth data are the poison data; and

if the Hamming distance is greater than or equal to the preset threshold, decoding the target data based on a first error feature, a second error feature, and a third error feature, and determining, based on a decoding result, the output data and the poison data indication information that indicates whether the output data is the poison data, wherein the first error feature is an error feature of the target data, the second error feature is an error feature of the second preset data, and the third error feature is an error feature of the third preset data.

11. The method according to claim 10, wherein the decoding the target data based on a first error feature, a second error feature, and a third error feature, and determining, based on a decoding result, the output data and the poison data indication information that indicates whether the output data is the poison data comprises:

decoding the target data based on the first error feature and the second error feature, to obtain a first decoding result;

decoding the target data based on the first error feature and the third error feature, to obtain a second decoding result;

decoding the target data based on the first error feature, to obtain a third decoding result;

if only the first decoding result is success, determining that the output data comprises second decoded data and second data, the poison data indication information indicates that the second decoded data is not the poison data and the second data is the poison data, and the second decoded data corresponds to the second target data;

if only the second decoding result is success, determining that the output data comprises third data and first decoded data, the poison data indication information indicates that the third data is the poison data and the first decoded data is not the poison data, and the first decoded data corresponds to the first target data;

if only the third decoding result is success, determining that the output data comprises the first decoded data and the second decoded data, and the output data indicates that the first decoded data and the second decoded data are not the poison data; and

if at least two of the first decoding result, the second decoding result, and the third decoding result are success or all of the first decoding result, the second decoding result, and the third decoding result are failure, determining that the output data comprises the third data and the fourth data, and the poison data indication information indicates that the third data and the fourth data are the poison data.

12. The method according to claim 7, 10, or 11, wherein the memory comprises the first memory rank and the second memory rank, the target data comprises the first target data and the second target data, and the preset data comprises the second preset data and the third preset data; and

the determining, based on preset data and the target data, output data to be sent to a processor and poison data indication information that indicates whether the output data is poison data comprises:

determining the output data and the poison data indication information based on the first error feature, the second error feature, and the third error feature, wherein the first error feature is the error feature of the target data, the second error feature is the error feature of the second preset data, and the third error feature is the error feature of the third preset data;

if the first error feature is equal to the third error feature, the output data comprises the first target data and the second target data, and the poison data indication information indicates that the first target data is not the poison data and the second target data is the poison data;

if the first error feature is equal to the second error feature, the output data comprises the first target data and the second target data, and the poison data indication information indicates that the first target data is the poison data and the second target data is not the poison data; and

if the first error feature is an all-zero polynomial, the output data comprises the first target data and the second target data, and the poison data indication information indicates that neither the first target data nor the second target data is the poison data.

13. A memory controller, comprising:

an obtaining unit, configured to obtain output data from a processor, wherein the output data comprises target data to be written into a memory and poison data indication information corresponding to the target data, and the poison data indication information indicates whether the target data is poison data;

a storage unit, configured to store preset data; and

a processing unit, configured to write, based on the poison data indication information, the preset data stored in the storage unit into the memory, or write to-be-written data determined based on the target data into the memory.

14. The memory controller according to claim 13, wherein the preset data is an invalid codeword.

15. The memory controller according to claim 13 or 14, wherein the processing unit is specifically configured to: when the poison data indication information indicates that the target data is the poison data, write the preset data into the memory; and
when the poison data indication information indicates that the target data is not the poison data, perform error correction encoding on the target data to obtain the to-be-written data, and write the to-be-written data into the memory.

16. The memory controller according to claim 13 or 14, wherein the memory comprises a first memory rank and a second memory rank, the target data comprises first target data and second target data, and the poison data indication information comprises first poison data indication information corresponding to the first target data and second poison data indication information corresponding to the second target data; and

the processing unit is specifically configured to: when the first poison data indication information indicates that the first target data is the poison data or the second poison data indication information indicates that the second target data is the poison data, write the preset data into the first memory rank and the second memory rank; and
when the first poison data indication information indicates that the first target data is not the poison data and the second poison data indication information indicates that the second target data is not the poison data, perform error correction encoding on the first target data and the second target data to obtain the to-be-written data, and write the to-be-written data into the first memory rank and the second memory rank.

17. The memory controller according to claim 13 or 14, wherein the memory comprises a first memory rank and a second memory rank, the target data comprises first target data and second target data, the poison data indication information comprises first poison data indication information corresponding to the first target data and second poison data indication information corresponding to the second target data, and the preset data comprises first preset data, second preset data, and third preset data; and

the processing unit is specifically configured to: when the first poison data indication information indicates that the first target data is the poison data and the second poison data indication information indicates that the second target data is the poison data, write the first preset data into the first memory rank and the second memory rank;
when the first poison data indication information indicates that the first target data is not the poison data and the second poison data indication information indicates that the second target data is not the poison data, perform error correction encoding on the first target data and the second target data to obtain the to-be-written data, and write the to-be-written data into the first memory rank and the second memory rank;
when the first poison data indication information indicates that the first target data is the poison data and the second poison data indication information indicates that the second target data is not the poison data, determine the to-be-written data based on the second target data and the second preset data, and write the to-be-written data into the first memory rank and the second memory rank; and
when the first poison data indication information indicates that the first target data is not the poison data and the second poison data indication information indicates that the second target data is the poison data, determine the to-be-written data based on the first target data and the third preset data, and write the to-be-written data into the first memory rank and the second memory rank.

18. The memory controller according to claim 17, wherein the processing unit is specifically configured to: perform $N + M$ error correction encoding on first combined data to obtain a first encoding result, wherein the first combined data is $x^{N/2 + M}M_2(x)$, $M_2(x)$ is the second target data, and N and M are positive integers; and add the first encoding result and the second preset data to obtain the to-be-written data; and
the processing unit is specifically configured to perform $N + M$ error correction encoding on second combined data to obtain a second encoding result, wherein the first combined data is $x^M M_1(x)$, and $M_1(x)$ is the first target data; and add the second encoding result and the third preset data to obtain the to-be-written data.

19. A memory controller, wherein the method comprises:

a receiving unit, configured to receive target data from a memory;
a storage unit, configured to store preset data; and

a processing unit, configured to determine, based on the preset data stored in the storage unit and the target data received by the receiving unit, output data to be sent to a processor and poison data indication information that indicates whether the output data is poison data.

20. The memory controller according to claim 19, wherein the processing unit is specifically configured to: determine whether a Hamming distance between the target data and the preset data is less than a preset threshold;

if the Hamming distance is less than the preset threshold, determine that the output data is first data, and the poison data indication information indicates that the first data is the poison data;
if the Hamming distance is greater than or equal to the preset threshold, perform error correction decoding on the target data;
if decoding succeeds, determine that the output data is decoded data, the poison data indication information indicates that the decoded data is not the poison data, and the decoded data is data obtained by performing error correction decoding on the target data; and
if decoding fails, determine that the output data is second data, and the poison data indication information indicates that the second data is the poison data.

21. The memory controller according to claim 19, wherein the memory comprises a first memory rank and a second memory rank, and the target data comprises first target data and second target data; and

the processing unit is specifically configured to: determine whether a Hamming distance between the target data and the preset data is less than a preset threshold;
if the Hamming distance is less than the preset threshold, determine that the output data is first data, and the poison data indication information indicates that the first data is the poison data;
if the Hamming distance is greater than or equal to the preset threshold, perform error correction decoding on the target data;
if decoding succeeds, determine that the output data comprises first decoded data and second decoded data, the poison data indication information indicates that the first decoded data and the second decoded data are not the poison data, the first decoded data corresponds to the first target data, and the second decoded data corresponds to the second target data; and
if decoding fails, determine that the output data comprises second data and third data, and the output data indicates that the second data and the third data are not the poison data.

22. The memory controller according to claim 19, wherein the memory comprises a first memory rank and a second memory rank, the target data comprises first target data and second target data, and the preset data comprises first preset data, second preset data, and third preset data; and

the processing unit is specifically configured to: determine whether a Hamming distance between the target data and the preset data is less than a preset threshold;
if the Hamming distance is less than the preset threshold, determine that the output data comprises third data and fourth data, and the poison data indication information indicates that the third data and the fourth data are the poison data; and
if the Hamming distance is greater than or equal to the preset threshold, decode the target data based on a first error feature, a second error feature, and a third error feature, and determine, based on a decoding result, the output data and the poison data indication information that indicates whether the output data is the poison data, wherein the first error feature is an error feature of the target data, the second error feature is an error feature of the second preset data, and the third error feature is an error feature of the third preset data.

23. The memory controller according to claim 22, wherein the processing unit is specifically configured to: perform decoding based on the first error feature and the second error feature, to obtain a first decoding result;

perform decoding based on the first error feature and the third error feature, to obtain a second decoding result;
perform decoding based on the first error feature, to obtain a third decoding result;
if only the first decoding result is success, determine that the output data comprises second decoded data and second data, the poison data indication information indicates that the second decoded data is not the poison data and the second data is the poison data, and the second decoded data corresponds to the second target data;
if only the second decoding result is success, determine that the output data comprises third data and first decoded data, the poison data indication information indicates that the third data is the poison data and the first decoded data is not the poison data, and the first decoded data corresponds to the first target data;

if only the third decoding result is success, determine that the output data comprises the first decoded data and the second decoded data, and the output data indicates that the first decoded data and the second decoded data are not the poison data; and

if at least two of the first decoding result, the second decoding result, and the third decoding result are success or all of the first decoding result, the second decoding result, and the third decoding result are failure, determine that the output data comprises the third data and the fourth data, and the poison data indication information indicates that the third data and the fourth data are the poison data.

24. The memory controller according to claim 19, 22, or 23, wherein the memory comprises the first memory rank and the second memory rank, the target data comprises the first target data and the second target data, and the preset data comprises the second preset data and the third preset data;

the processing unit is specifically configured to determine the output data and the poison data indication information based on the first error feature, the second error feature, and the third error feature, wherein the first error feature is the error feature of the target data, the second error feature is the error feature of the second preset data, and the third error feature is the error feature of the third preset data;

if the first error feature is equal to the third error feature, the output data comprises the first target data and the second target data, and the poison data indication information indicates that the first target data is not the poison data and the second target data is the poison data;

if the first error feature is equal to the second error feature, the output data comprises the first target data and the second target data, and the poison data indication information indicates that the first target data is the poison data and the second target data is not the poison data; and

if the first error feature is an all-zero polynomial, the output data comprises the first target data and the second target data, and the poison data indication information indicates that neither the first target data nor the second target data is the poison data.

25. A computer device, comprising a processor and a memory controller, wherein

the memory controller is configured to: obtain data from the processor, and perform the method according to any one of claims 1 to 6, and/or;

the memory controller is configured to: obtain data from the memory, and execute the method according to any one of claims 7 to 12 to determine output data to be sent to the processor and poison data indication information that indicates whether the output data is poison data.

26. A memory controller, comprising: a logic circuit, wherein the logic circuit is configured to be coupled to an input/output interface, and is configured to transmit data through the input/output interface, to perform the method according to any one of claims 1 to 6 and/or 7 to 12.

27. A computer-readable medium, wherein the computer-readable medium stores program code, and when the computer program code is run on a computer, the computer performs the method according to any one of claims 1 to 6 and/or 7 to 12.

| Column | PAR | 0 | 1 | 2 | 3 | 4 | 5 | 6 | 7 | 8 | 9 | 10 | 11 | 12 | 13 | 14 | 15 | 16 | Row |
|---|---|---|---|---|---|---|---|---|---|---|---|---|---|---|---|---|---|---|---|
| | $p_{15}$ | m | $d_{16}$ | | | | | | | | | | | | | | $d_{240}$ | $d_{256}$ | 15 |
| | $p_{14}$ | $c_{14}$ | $d_{15}$ | | | | | | | | | | | | | | $d_{239}$ | $d_{255}$ | 14 |
| | $p_{13}$ | $c_{13}$ | $d_{14}$ | | | | | | | | | | | | | | | $d_{254}$ | 13 |
| | ... | ... | ... | ... | ... | ... | ... | ... | ... | ... | ... | ... | ... | ... | ... | ... | ... | ... | ... |
| | $p_2$ | $c_2$ | $d_3$ | | | | | | | | | | | | | | | | |
| | $p_1$ | $c_1$ | $d_2$ | | | | | | | | | | | | | | | | |
| | $p_0$ | $c_0$ | $d_1$ | | | | | | | | | | | | | | | $d_{241}$ | 0 |

TO FIG. 1B

FIG. 1A

FIG. 1B

Column

| | 16 | 15 | 14 | 13 | 12 | 11 | 10 | 9 | 8 | 7 | 6 | 5 | 4 | 3 | 2 | 1 | 0 | PAR |
|---|---|---|---|---|---|---|---|---|---|---|---|---|---|---|---|---|---|---|
| 15 | $d_{256}$ | $d_{240}$ | | | | | | | | | | | | | | $d_{16}$ | $c_{15}$ | $p_{15}$ |
| 14 | $d_{255}$ | $d_{239}$ | | | | | | | | | | | | | | $d_{15}$ | $c_{14}$ | $p_{14}$ |
| 13 | $d_{254}$ | | | | | | | | | | | | | | | $d_{14}$ | $c_{13}$ | $p_{13}$ |
| ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ | ⋮ |
| | | | | | | | | | | | | | | | | $d_3$ | $c_2$ | $p_2$ |
| | | | | | | | | | | | | | | | | $d_2$ | $c_1$ | $p_1$ |
| 0 | $d_{241}$ | | | | | | | | | | | | | | | $d_1$ | $c_0$ | $p_0$ |

Row

TO
FIG. 2B

TO
FIG. 2B

FIG. 2A

FIG. 2B

Computer device 300

Memory
330

Memory
controller 320

CPU
310

Communication
circuit
350

Input/Output apparatus
340

FIG. 3

Memory controller 320

Memory interface unit 322

ECC unit 321

CPU interface unit 323

Storage unit 324

**FIG. 4**

Memory 330

Memory controller 320

CPU 310

501: Output data

502: Preset data/ Target data

**FIG. 5**

Not degraded

17 16 15 14 13 12 11 10 9 8 7 6 5 4 3 2 1 0

Memory rank 601

17 16 15 14 13 12 11 10 9 8 7 6 5 4 3 2 1 0

Memory rank 602

16-bit

Degraded

17 16 15 14 13 12 11 10 9 8 7 6 5 4 3 2 1 0 17 16 15 14 13 12 11 10 9 8 7 6 5 4 3 2 1 0

Memory rank 601

Memory rank 602

16-bit

FIG. 6

Not degraded

8 7 6 5 4 3 2 1 0    8 7 6 5 4 3 2 1 0

32-bit

Memory rank 701    Memory rank 702

Degraded

8 7 6 5 4 3 2 1 0 8 7 6 5 4 3 2 1 0

32-bit

Memory rank 701    Memory rank 702

FIG. 7

FIG. 8

FIG. 9

FIG. 10

FIG. 11

FIG. 12

FIG. 13

FIG. 14

FIG. 15

Memory controller 1600

Processing unit 1603 — Obtaining unit 1601

Storage unit 1602

FIG. 16

Memory controller 1700

Processing unit 1703 — Receiving unit 1701

Storage unit 1702

FIG. 17

## INTERNATIONAL SEARCH REPORT

| International application No. |
| --- |
| **PCT/CN2023/086651** |

**A.    CLASSIFICATION OF SUBJECT MATTER**

G06F 11/10(2006.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; WPABS; ENTXT; CNKI; IEEE: 存储, 数据, 输出, 内存, 读, 写, 错误, 指示, 控制器, 颗粒, 距离, storage, data, output, memory, read, write, error, indicate, controller, particle, distance

**C.    DOCUMENTS CONSIDERED TO BE RELEVANT**

| Category* | Citation of document, with indication, where appropriate, of the relevant passages | Relevant to claim No. |
| --- | --- | --- |
| X | US 2005188292 A1 (INTERNATIONAL BUSINESS MACHINES CORPORATION) 25 August 2005 (2005-08-25)<br>description, paragraphs 32-81 | 1-3, 7, 13-15, 19, 25-27 |
| Y | US 2005188292 A1 (INTERNATIONAL BUSINESS MACHINES CORPORATION) 25 August 2005 (2005-08-25)<br>description, paragraphs 32-81 | 4-6, 16-18 |
| X | US 2014006904 A1 (INTEL CORPORATION) 02 January 2014 (2014-01-02)<br>description, paragraphs 10-54 | 1-3, 7, 13-15, 19, 25-27 |
| Y | US 2014006904 A1 (INTEL CORPORATION) 02 January 2014 (2014-01-02)<br>description, paragraphs 10-54 | 4-6, 16-18 |
| Y | CN 112612637 A (HYGON INFORMATION TECHNOLOGY CO., LTD.) 06 April 2021 (2021-04-06)<br>description, paragraphs 54-112 | 4-6, 16-18 |
| A | CN 110046061 A (HUAWEI TECHNOLOGIES CO., LTD.) 23 July 2019 (2019-07-23)<br>entire document | 1-27 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 June 2023** | **20 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 492 243 A1

## INTERNATIONAL SEARCH REPORT

International application No.

**PCT/CN2023/086651**

### C. DOCUMENTS CONSIDERED TO BE RELEVANT

| Category* | Citation of document, with indication, where appropriate, of the relevant passages | Relevant to claim No. |
|---|---|---|
| A | CN 113380303 A (WINBOND ELECTRONICS CORP.) 10 September 2021 (2021-09-10)<br>entire document | 1-27 |
| A | JP H08202628 A (FUJITSU LTD.) 09 August 1996 (1996-08-09)<br>entire document | 1-27 |

Form PCT/ISA/210 (second sheet) (July 2022)

43

<table>
<tr><td colspan="2" align="center">INTERNATIONAL SEARCH REPORT<br>Information on patent family members</td><td colspan="2">International application No.<br><strong>PCT/CN2023/086651</strong></td></tr>
</table>

| Patent document cited in search report | Publication date (day/month/year) | Patent family member(s) | Publication date (day/month/year) |
|---|---|---|---|
| US 2005188292 A1 | 25 August 2005 | US 7171591 B2 | 30 January 2007 |
| US 2014006904 A1 | 02 January 2014 | None | |
| CN 112612637 A | 06 April 2021 | None | |
| CN 110046061 A | 23 July 2019 | WO 2020177493 A1 | 10 September 2020 |
| | | US 2021389956 A1 | 16 December 2021 |
| | | EP 3916557 A1 | 01 December 2021 |
| CN 113380303 A | 10 September 2021 | None | |
| JP H08202628 A | 09 August 1996 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210381892